# EUROPEAN PATENT SPECIFICATION

(11) **EP 2 911 065 B1**
(45) Date of publication and mention of the grant of the patent: **27.12.2017**
(21) Application number: 15156155.2
(22) Date of filing: 23.02.2015
(51) Int. Cl.: G06F 13/16, G06F 12/06

(54) **Distributed procedure execution and file systems on a memory interface**
Verteilt Prozedurausführung und Dateisysteme an einer Speicherschnittstelle
Procédure d'éxécution distribuée et systèmes de fichiers pour une interface mémoire

(30) Priority: 23.02.2014 US 201414187290
(43) Date of publication of application: 26.08.2015
(73) Proprietor: Rambus Inc., Sunnyvale, CA 94089 (US); Woo, Steven, Sunnyvale, CA 94089 (US); Perego, Richard, Thornton, CO 80602 (US); Batra, Pradeep, Sunnyvale, CA 94089 (US); Lai, Lawrence, Sunnyvale, CA 94089 (US); Yeung, Chi-Ming, Sunnyvale, CA 94089 (US)
(72) Inventor: Woo, Steven, Sunnyvale, CA 94089 (US); Perego, Richard, Thornton, CO 80602 (US); Batra, Pradeep, Sunnyvale, CA 94089 (US); Lai, Lawrence, Sunnyvale, CA 94089 (US); Yeung, Chi-Ming, Sunnyvale, CA 94089 (US)
(74) Representative: Eisenführ Speiser

(56) References cited:
- WO-A1-2013/028859
- WO-A2-2013/016723
- US-A1- 2006 041 711
- US-A1- 2013 138 874

## Description

### Field of the Invention

The present invention relates to memory systems and, in particular, to scalable memory systems that support parallel processing.

### Background art

Personal computers commonly include a central processing unit (CPU) that executes instructions and stores data in main memory. The main memory is typically provided as one or more printed-circuit boards, each supporting integrated-circuit (IC) memory devices and coupled to the CPU via one or more main-memory buses. Specialized functions, such as graphics processing, can be passed to a separate card on a separate "expansion" bus. In a typical example, a CPU can assign resource-intensive graphics processes to a dedicated graphics card. Such systems improve overall performance, but are expensive and may not allocate communication resources efficiently. For example, relatively graphics-intensive processes may overwhelm the expansion bus, whereas less graphics-intensive processes may leave this resource underutilized.

In popular computer architectures peripheral functionality is provided by "computing engines" located with the memory ICs on the main-memory modules. The computing engines can share main memory, which allows for more efficient memory allocation between the CPU and the peripheral engines, and communication bandwidth can be optimized over the common main-memory buses such that performance can be improved and/or costs can be saved.

In order to exploit high capacity storage offered by nonvolatile memories it is desirable to include nonvolatile memory (e.g., flash memory, solid-state disk) on memory modules that are on a DRAM memory channel.

WO 2013/028859 discloses a memory system including a CPU that communicates commands and addresses to a main-memory module. The module includes a buffer circuit that relays commands and data between the CPU and the main memory. The memory module additionally includes an embedded processor that shares access to main memory in support of peripheral functionality, such as graphics processing, for improved overall system performance.

Form WO 2013 016723 a system is known in which a memory controller can access the memory module using a standard access protocol, such as JEDEC's DDR DRAM, by sending a memory access command to the on-DIMM Controller (CDC) which in turn determines what type of a data transfer operation it is and the corresponding target address where the data information is stored, e.g. data information is stored in the DRAM or Flash memory subsystems. Hence, the CDC receives standard DDR commands from the memory controller hub, interprets, and produces commands and/or control signals to control the operation of the data manager, the Flash memory and the DRAM memory.

US 2006 0041711 discloses a memory module including a non-volatile memory, a dynamic random access memory, a static random access memory and a control circuit that accesses the non-volatile memory, the dynamic random access memory and the static random access memory, wherein respective memory interfaces are used for dynamic random access memory and static random access memory.

It is an object of the present invention to further improve the integration of nonvolatile memory residing on a main memory module.

### Summary of the invention

The object is achieved by a system and memory module as defined in the independent claims.

According to a first aspect of the invention there is provided a system comprising: a central processing unit with a memory controller configured to receive delivery of module data from a module memory using parallel data channels; and a dual-inline memory module configured to send the module data to the central processing unit via the memory controller, including: a module interface configured to send the module data from the dual-inline memory module using parallel data channels, a non-volatile flash memory bank , and one or more integrated circuits configured to send the module data using the parallel data channels and to enable the module data to be stored in a dynamic random access memory bank, written to the dynamic random access memory bank, and read from the non-volatile flash memory bank , wherein the one or more integrated circuits are configured to translate between a first addressing scheme employed by the dynamic random access memory bank and a second addressing scheme employed by the non-volatile flash memory bank , the module also configured to execute at least a part of a module block device driver that receives the block I/O storage type device commands via the parallel data channels , from a local file system executed by the central processing unit, the block I/O storage type device commands received from the local file system causing the module data to be read from the non-volatile flash memory bank .

In an embodiment the integrated circuit is configured to enable: the module data to be written to the dynamic random access memory bank employing the first addressing scheme; the module data written to the dynamic random access memory bank employing the first addressing scheme to be read; the module data read from non-volatile flash memory bank to be translated from the second addressing scheme employed by non-volatile flash memory bank to the first addressing scheme employed by the dynamic random access memory bank ; and the module data translated to the second addressing scheme employed by the non-volatile flash memory bank to be written to the dynamic random access memory bank employing the first addressing scheme.

In an embodiment the integrated circuit further comprises a buffer, in particular further comprising a bridge circuit configured to enable the module data to be read from or written to the non-volatile flash memory bank , wherein the bridge circuit is configured to perform serialization or deserialization operations.

According to a second aspect of the invention there is provided a dual-inline memory module comprising: a module interface configured to send module data from the dual-inline memory module using parallel data channels; a non-volatile flash memory bank ; and one or more integrated circuits configured to enable the module data to be read from the non-volatile flash memory bank and to be written to a dynamic random access memory bank , the one or more integrated circuits also configured to read the module data from the dynamic random access memory bank and send, via the parallel data channels , the module data read from the dynamic random access memory bank , and, wherein the one or more integrated circuits are configured to translate between a first addressing scheme employed by the dynamic random access memory bank and a second addressing scheme employed by the non-volatile flash memory bank, the module to execute at least a part of a module block device driver that receives the block I/O storage type device commands via the parallel data channels from a local file system, the block I/O storage type device commands received from the local file system causing the module data to be read from the non-volatile flash memory bank .

According to a third aspect of the invention there is provided a dual-inline memory module comprising: a module interface configured to receive module data into the dual-inline memory module using parallel data channels; a non-volatile flash memory bank; and one or more integrated circuits configured to receive the module data using the parallel data channels and to enable the module data to be written to a dynamic random access memory bank , read from the dynamic random access memory bank, and written to the non-volatile flash memory bank, wherein the one or more integrated circuits are configured to translate between a first addressing scheme employed by the dynamic random access memory bank and a second addressing scheme employed by the non-volatile flash memory bank, the module to execute at least a part of a module block device driver that receives the block I/O storage type device commands via the parallel data channels from a local file system, the block I/O storage type device commands received from the local file system causing the module data to be written to the non-volatile flash memory bank.

In an embodiment the dynamic random access memory bank is located outside of the integrated circuit, in particular wherein the dynamic random access memory bank includes dynamic data rate memory and the non-volatile flash memory bank includes a solid state disk.

In an embodiment the integrated circuit is configured to enable: the module data to be read from the non-volatile flash memory bank employing the second addressing scheme; the module data read from the non-volatile flash memory bank employing the second addressing scheme to be written to the dynamic random access memory bank; the module data written to the dynamic random access memory bank to be translated from the second addressing scheme employed by the non-volatile flash memory bank to the first addressing scheme employed by the dynamic random access memory bank; and the module data translated to the first addressing scheme employed by the dynamic random access memory bank to be read from the dynamic random access memory bank employing the first addressing scheme.

In an embodiment the integrated circuit is configured to enable: the module data to be written to the dynamic random access memory bank employing the first addressing scheme; the module data written to the dynamic random access memory bank employing the first addressing scheme to be read; the module data read from the dynamic random access memory bank to be translated from the first addressing scheme employed by the dynamic random access memory bank to the second addressing scheme employed by the non-volatile flash memory bank; and the module data translated to the second addressing scheme employed by the non-volatile flash memory bank to be written to the non-volatile flash memory bank employing the second addressing scheme.

In an embodiment the integrated circuit further comprises a buffer, in particular, wherein the buffer further comprises: a write buffer including a write data queue circuit; and a read buffer including a read data queue circuit, in particular, wherein the integrated circuit is configured to enable: the module data to be written from the buffer to the dynamic random access memory bank, the module data to be read from the dynamic random access memory bank into the buffer; and the module data to be read from the non-volatile flash memory bank into the buffer, or the module data to be written from the buffer to the non-volatile flash memory bank, respectively.

In an embodiment the integrated circuit further comprises: a peripheral processor configured to execute commands; and a controller configured to translate between the first addressing scheme employed by the dynamic random access memory bank and the second addressing scheme employed by the non-volatile flash memory bank according to instructions from the peripheral processor.

In an embodiment the dual-inline memory module further comprises a bridge circuit configured to enable the module data to be read from or written to the non-volatile flash memory bank, in particular, wherein the bridge circuit is configured to perform serialization or deserialization operations, in particular, wherein the bridge circuit is located within the integrated circuit.

According to a fourth aspect of the invention there is provided a system comprising: a central processing unit (105, 712) with a memory controller configured to direct delivery of module data from the central processing unit to module memory using parallel data channels; and a dual-inline memory module configured to receive the module data from the central processing unit, including: a module interface configured to receive the module data into the dual-inline memory module using parallel data channels, a non-volatile flash memory bank, and one or more integrated circuits configured to receive the module data using the parallel data channels and to enable the module data to be written to a dynamic random access memory (dynamic random access memory) bank, read from the dynamic random access memory bank, and written to the non-volatile flash memory bank, wherein the one or more integrated circuits are configured to translate between a first addressing scheme employed by the dynamic random access memory bank and a second addressing scheme employed by the non-volatile flash memory bank, the module also configured to execute at least a part of a module block device driver that receives the block I/O storage type device commands via the parallel data channels, from a local file system executed by the central processing unit (105, 712), the block I/O storage type device commands received from the local file system causing the module data to be written to the non-volatile flash memory bank.

In an embodiment the integrated circuit is configured to enable: the module data to be written to the dynamic random access memory bank employing the first addressing scheme; the module data written to the dynamic random access memory bank employing the first addressing scheme to be read; the module data read from the dynamic random access memory bank to be translated from the first addressing scheme employed by the dynamic random access memory bank to the second addressing scheme employed by the non-volatile flash memory bank; and the module data translated to the second addressing scheme employed by the non-volatile flash memory bank to be written to the non-volatile flash memory bank employing the second addressing scheme.

In an embodiment the integrated circuit further comprises a buffer.

In an embodiment the system further comprises a bridge circuit configured to enable the module data to be read from or written to the non-volatile flash memory bank, in particular, wherein the bridge circuit is configured to perform serialization or deserialization operations.

### BRIEF DESCRIPTION OF THE DRAWINGS

The present invention is illustrated by way of example, and not by way of limitation, in the figures of the accompanying drawings and in which like reference numerals refer to similar elements.
Figure 1 depicts a memory system 100 in accordance with one embodiment. System 100 includes a CPU 105 that communicates data DQ and command and addresses CA with a memory module 110 via a main-memory interface 115.
Figure 2 illustrates a data structure 200 that peripheral driver 146 assembles and stores in cache 142 to convey commands and data to the OPBA command port in accordance with one embodiment.
Figure 3 is a flowchart 300 illustrating how memory module 110 of Figure 1 manages OS requests from CPU 105 for access to main memory 120 and support from peripheral processor 135 in accordance with one embodiment.
Figure 4 depicts a memory system 400 in accordance with another embodiment.
Figure 5 depicts a memory module 500 in accordance with an embodiment that supports peripheral-command broadcasting and configurable data widths.
Figure 6 illustrates a data structure 600 that a peripheral driver (e.g., driver 146 of Figure 1) assembles and stores in a cache to convey instructions and data to the OPBA command ports of thirty-two modules 500, eight x8 modules on each of four memory channels.
Figure 7 is an illustration of a hybrid flash/DRAM memory module.
Figure 8 is a block diagram illustrating a hybrid flash/DRAM compute subsystem.
Figure 9 is an illustration of a hybrid flash/DRAM memory module.
Figure 10 is a block diagram illustrating a hybrid flash/DRAM compute subsystem.
Figure 11 is an illustration of a hybrid disk type nonvolatile storage and DRAM memory module.
Figure 12 is a block diagram illustrating a hybrid disk type nonvolatile storage and DRAM memory module compute subsystem.
Figure 13 is an illustration of a system for accessing file data stored in nonvolatile memory on a DRAM memory channel.
Figure 14 is an illustration of a system for remotely accessing file data stored in nonvolatile memory on a DRAM memory channel.
Figure 15 is an illustration of a system for remotely accessing file data stored in nonvolatile memory on a DRAM memory channel using block I/O storage type device commands.
Figure 16 is an illustration of a system for servicing remote requests for data stored in nonvolatile memory on a DRAM memory channel.
Figure 17 is an illustration of a system for servicing remote requests to a solid-state disk on a DRAM memory channel.
Figure 18 is an illustration of a system for distributed file processing.
Figure 19 is a flowchart illustrating a method of operating a memory module.
Figure 20 is a flowchart illustrating a method of operating a memory module.
Figure 21 is a flowchart illustrating a method of operating a memory module.
Figure 22 is a flowchart illustrating a method of operating a memory module.
Figure 23 is a flowchart illustrating a method of servicing remote procedure call requests.
Figure 24 is a flowchart illustrating a method of communicating and servicing remote procedure call requests.
Figure 25 is a flowchart illustrating method of performing distributed processing functions.
Figure 26 is a flowchart illustrating a method of operating a memory module.
Figure 27 is block diagram of a computer.

### DETAILED DESCRIPTION OF THE EMBODIMENTS

In an embodiment, nonvolatile memory (e.g., flash memory, solid-state disk) are included on memory modules that are on a DRAM memory channel. This helps the high capacity storage offered by nonvolatile memories to reside closer to the compute resources (i.e., CPU) of a system. In addition, the CPU and the nonvolatile memory can pass commands and/or data (possibly via a controller) using the relatively high bandwidth of the DRAM memory channel.

Nonvolatile memory residing on a DRAM memory channel can be integrated into the existing file system structures of popular operating systems to facilitate adoption into popular programming paradigms. One such method of integration is to have the nonvolatile memory residing on a DRAM memory channel presented as part of, or all of, a distributed file system. For example, popular operating systems may be modified to present the nonvolatile memory residing on a DRAM memory channel as part of a network file system (NFS), Hadoop file system, and/or other distributed file systems (DFS). Remote procedure call (RPC) requests and/or requests originating from the local CPU (whether using the RPC mechanism/software layers, or another method), or information associated with local request and/or RPCs, may be routed to the memory modules over the DRAM memory channel in order to service compute and/or DFS commands.

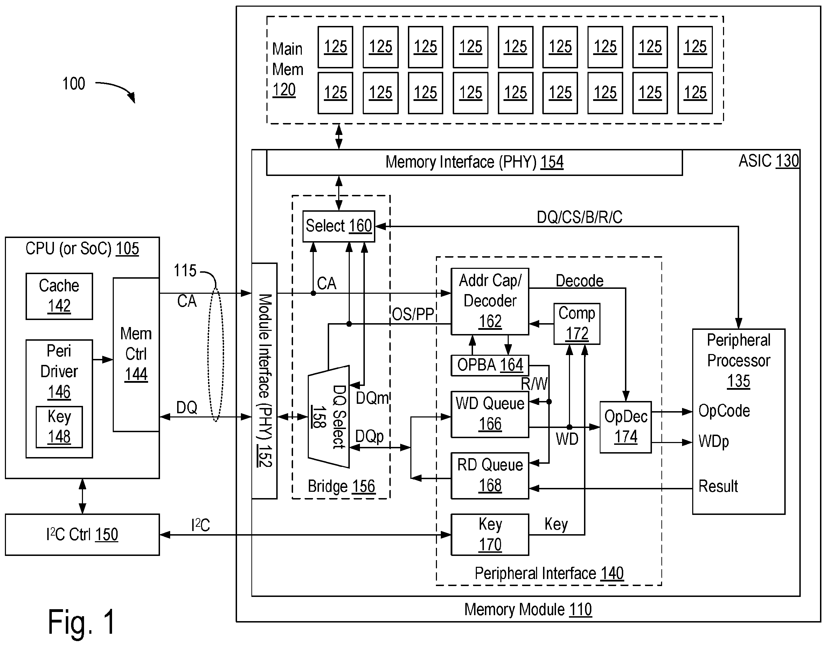

Figure 1 depicts a memory system 100 in accordance with one embodiment. System 100 includes a CPU 105 that communicates data DQ and command and addresses CA with a memory module 110 via a main-memory interface 115. Memory module 110 includes main-memory 120, consisting of a group of IC main-memory devices 125 in this example. Module 110 additionally includes an application-specific integrated circuit (ASIC) 130 that acts as a buffer device to relay commands and data between CPU 105 and main memory 120. ASIC 130 additionally includes an embedded processor 135 that shares access to main memory in support of peripheral functionality, such as graphics or computational processing, for improved overall system performance. A peripheral interface 140 facilitates the communication of peripheral commands and data between CPU 105 and peripheral processor 135 in a manner that minimizes or eliminates the need to modify CPU 105, and consequently reduces practical barriers to the adoption of main-memory modules with integrated processing support.

CPU 105, possibly a system-on-a-chip (SoC), includes a cache 142 and a memory controller 144, and executes a software peripheral driver 146. Driver 146 has access to key storage 148, and can be, e.g., a software and/or firmware driver provided in support of communication with module 110 as detailed herein. Driver 146 can be software loaded by a manufacturer or consumer, and may allow for legacy memory system compatibility with little or no hardware modifications.

An I2C controller 150 and related serial buses provide a reliable standardized channel that allows CPU 105 to access module-specific configuration information from module 110, which is typically stored in an EEPROM (not shown). This information is used to initialize the relatively high-performance interface 115 using techniques that are well known to those of skill in the art. These same resources are used in the depicted embodiment to share a key between peripheral interface 140 and key storage 148. Controller 150 can be integrated with other components of CPU 105.

ASIC 130 includes two physical interfaces (PHY), both of which can be conventional. The first is a module interface 152, which receives externally generated transactions like module commands, main-memory addresses, and module data, from controller 144. The second physical interface is a memory interface 154, which supports communication between ASIC 130 and main memory 120. Although the memory interface can be of the same type as the module interface, in some embodiments the memory interface can differ in the type of signaling employed, data width, command format, or other aspects that require translation by ASIC 130. A bridge circuit 156 includes select logic 158 and 160 that allow peripheral interface 140, based on bridging criteria specified using module commands, to bridge the communication of commands, addresses, and data between main memory 120 and either CPU 105 or peripheral processor 135. Bridge circuit 156 also allows peripheral interface 140 to capture module data that includes operational codes ("opcodes," or "peripheral commands"), addresses, data, and other control signals for peripheral processor 135. Module interface 152 may support a different number of parallel data channels than main-memory interface 154, in which case bridge circuit 156 can perform serialization/deserialization operations for memory data passed between the interfaces.

Peripheral interface 140 functionally resides between bridge circuit 156 and peripheral processor 135, and includes an address-capture/command decoder 162, an opcode-port base address (OPBA) register 164, write and read data queues 166 and 168, a key register 170, a comparator 172, and an opcode decoder 174. These elements collectively allow peripheral interface 140 to establish an opcode aperture, correlated to a specified capture range of one or more main-memory addresses, through which CPU 105 can communicate opcodes and data to peripheral processor 135. Responsive to such opcodes, peripheral processor 135 can support various aperture functions by executing instructions stored in main memory 120 or elsewhere. In some embodiments peripheral processor 135 has the capability to generate peripheral memory commands, addresses, and data responsive to opcodes. The specified capture range of the main-memory addresses used by the peripheral interface to capture module data represents a subrange of the memory addresses receivable at the module interface, and can lie outside of the full range of main-memory addresses used to address main memory.

Main memory 120 can include multiple independently accessible ranks or groups of ranks, and some of devices 125 can be used to store error-correction codes. In this context, a "rank" refers to a set of separately addressable memory devices used for a single memory access. In such embodiments different ranks or rank groups can support separate physical memory interfaces, such as one for each of CPU 105 and peripheral processor 135. Bridging criterion specified to decoder 162 may, in such embodiments, pass module commands, main-memory addresses, and module data from module interface 152 to at least one of the multiple ranks of memory devices, and pass peripheral memory commands, addresses, and data from the peripheral processor to at least one other of the multiple ranks of memory devices. Such bridging criterion may be dynamically selectable to support sequential or simultaneous access to main memory from both processors without loss of data in a selected one of the multiple ranks, or to change between passing module commands, main-memory addresses, and module data from the module interface to the selected one of the multiple ranks of memory devices and passing peripheral memory commands, addresses, and data from the peripheral processor to the selected one of the multiple ranks.

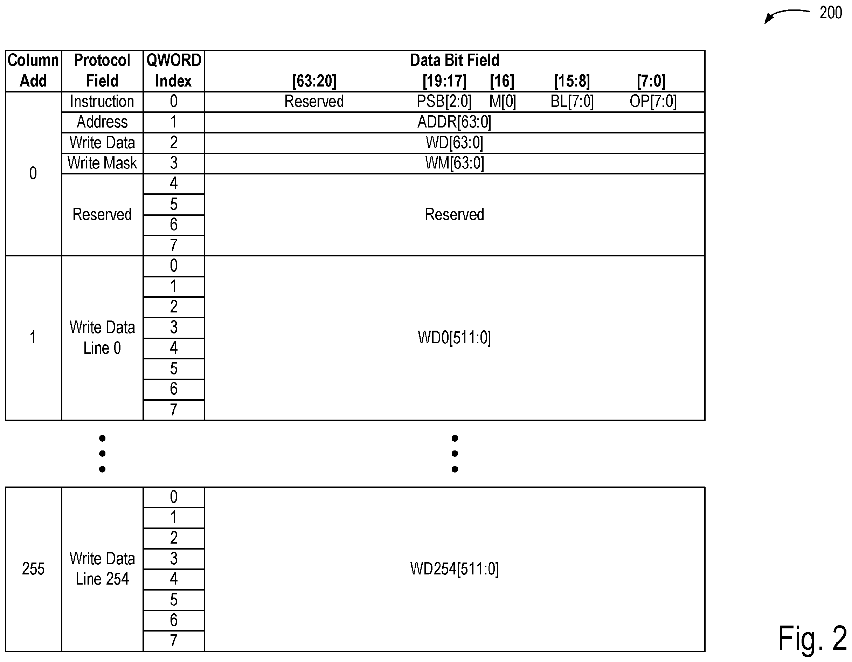

Figure 2 illustrates a data structure 200 that peripheral driver 146 assembles and stores in cache 142 to convey instructions and data to the OPBA command port in accordance with one embodiment. Data structure 200 specifies the information to be stored in write-data queue 166 over one or more write operations to the OPBA row. The information is divided into 256 logical columns in the same manner as write-data queue 166, and each logical column is further divided into eight 64-bit fields, an instruction field, an address field, a write-data field, a write-mask field, and four fields that are reserved. These fields are uniquely designated by a "Qword Index" in Figure 2. The term "Qword" stands for "quad-word," with a word being sixteen bits.

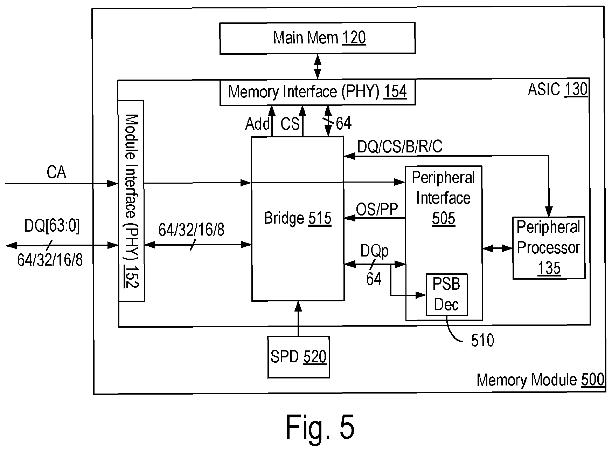

Eight bits OP[7:0] of the instruction field are used to represent an opcode to be decoded by OpCode decoder 174 (or passed to peripheral processor 135 for decoding). Eight more bits BL[7:0] store a burst-length variable, which can be used to specify the number of subsequent write accesses to be burst into queue 166. Embodiments thus allow for high-efficiency open-page write and read data bursts of up to 256 columns. Processor 135 may be required to complete a specified burst before executing whatever instruction is encoded in the bits OP[7:0] to avoid a race condition. The next instruction bit M[0] indicates whether to apply a data mask specified in the write-mask field. Bits PSB[2:0] are optional peripheral-select bits, so called because they specify one or more peripheral processors that are the target of broadcast commands. An embodiment that uses PSB bits to allow commands receives at a plurality of modules to be executed by any one or combination of their respective peripheral processors is detailed in connection with Figure 5. The remaining bits 63:20 of the instruction field are reserved.

The address field allows CPU 105 to specify a memory address to peripheral processor 135, such as to identify a location in main memory, a register on module 110, or some other memory or function. These addresses can map to anywhere in the memory hierarchy of ASIC 130 and in any way desired between driver 146 and ASIC 130 with little or no impact on CPU 105 or the operating system.

The write-data field in the OPBA column allows opcodes to the OPBA to communicate up to sixty-four bits of write data. Each of the remaining 255 columns of the OPBA row can contain up to 512 additional bits of write data. All of this write data can be passed to peripheral processor 135, as peripheral write data WDp, for storage and manipulation. Such data might include, for example, processor instructions to be stored in main memory 120 or elsewhere for execution by processor 135.

As noted previously, data structure 200 is created in cache 142 and written into write-data queue 166. Processor 135 can manipulate or store this information and return the results of such manipulation or data read from memory to CPU 105 via read-data queue 168. A non-exhaustive list of possible operations and their associated opcodes are noted below.

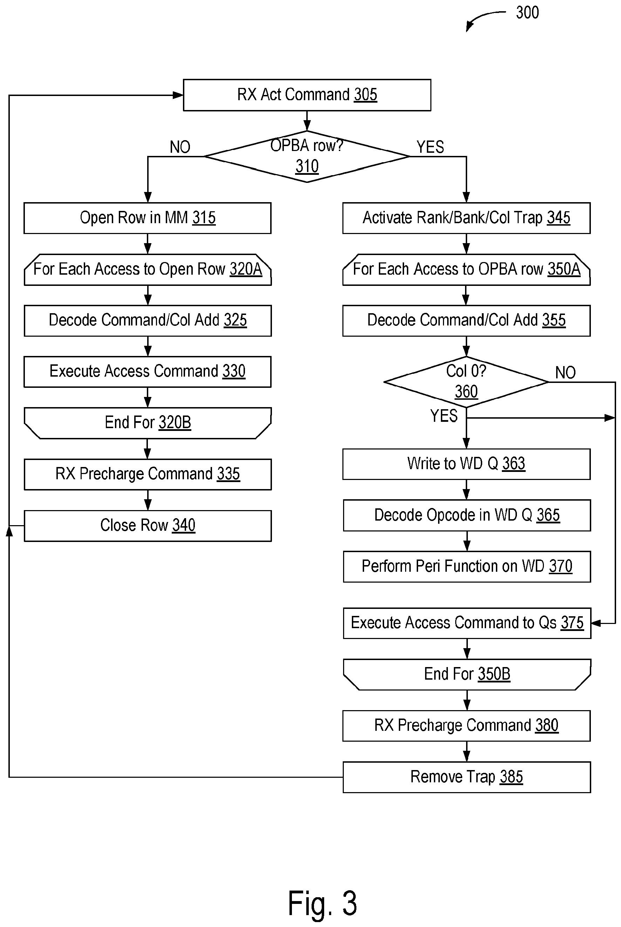

Figure 3 is a flowchart 300 illustrating how memory module 110 of Figure 1 manages OS requests from CPU 105 for access to main memory120 and support from peripheral processor 135 in accordance with one embodiment. Both main-memory and peripheral-processor requests can be initiated and directed using access commands directed to main-memory addresses.

At 305, decoder 162 in peripheral interface 140 captures an activate command ACT from memory controller 144 via command/address bus CA. Decoder 162 references register 164 to determine whether the main-memory address to which the command is directed matches the stored OPBA row (decision 310). If not, then the command is a conventional main-memory command. Decoder 162 directs the command to main memory 120 via select logic 160 to activate (open) the addressed row in devices 125 (315). Module 110 subsequently receives one or more access commands directed to columns within the open row. In this embodiment such access commands specify the bank and rank of the OPBA but lack the row address. As indicated in the For-loop 320A/B, main-memory devices 125 decode and execute these commands (325 and 330). Eventually module 110 will receive a precharge command (335) and devices 125 will close the open row (340) in preparation for the next main-memory access.

Returning to decision 310, and assuming the received command is directed to the OPBA row, decoder 162 activates a trap for subsequent column accesses to the rank and bank address corresponding to the OPBA row (345). Column commands generally do not explicitly identify the open row to which the command is directed, but most DRAM devices and controllers allow only one row to be open in each rank and bank. Accordingly, once the OPBA row has been "activated," any column access commands directed to the OPBA rank and bank address can be trapped as data transfers with either WD queue 166 or RD queue 168. Activations to the OPBA row and column commands directed to an activated OPBA row may also be passed to memory interface 154 in parallel with comparisons performed by decoder 162 to avoid potential added latency for the comparison operations. Parallel forwarding of OPBA row activity to memory interface 154 can cause activity on main-memory devices 125-this activity is of no consequence, however, as bridge circuit 156 will not pass the addressed data to or from main memory 120 if the OPBA row is selected. Decoder 162 also controls select logic 158 to connect data bus DQ to a pair of queues 166 and 168, which respectively serve as write and read buffers.

Each of queues 166 and 168 stores one page (16KB) divided into 256 64B subsections that are uniquely identified by a column address, e.g., an addressing structure that mirrors that of a page of main memory 120. Write queue 166 effectively takes the place of the OPBA row address in main memory for write operations, while read queue 168 does the same for read operations. Queues 166 and 168 are static random-access memory (SRAM) in this example, and thus do not require "activation" in the sense that a DRAM row requires activation.

Once decoder 162 identifies a row activation as directed to the OPBA row, and thus to the "open" queues, decoder 162 awaits an access command specifying an operation and a column to which the operation is directed. Decoder 162 then decodes each subsequent access command to the OPBA row address (355 with For loop 350A/B). If a write access is to column zero, the assigned OPBA in this example, then decoder 162 issues a control signal Decode to OpCode decoder 174, causing decoder 174 to decode an opcode from the column zero address in write-data queue 166 (365), and pass the decoded opcode OpCode and any associated peripheral write data WDp to peripheral processor 135. Peripheral processor 135 executes the opcode OpCode to perform some peripheral function (370), and in so doing may alter the contents of main memory via bridge circuit 156.

Access commands to the OPBA row can be to any of the 256 columns. Decoder 162 decodes the command information in each case and performs the commanded function on queues 166 and 168 (375). A read command to any column of the row address for the OPBA, for example, reads from the specified subset of locations in read queue 168, and a write command to any column of the same row address writes to the corresponding subset of locations in write queue 166. Eventually, module 110 will receive a precharge command (380) for the rank and bank assigned to the OPBA, and decoder 162 will release the column-address trap (385). Module 110 thereafter awaits the next command. It is also of note that although flowchart 300 shows separate paths for main memory accesses and OPBA row accesses, a typical memory controller will interleave memory commands to multiple banks and/or ranks-thus in many instances CPU 105 can be accessing main memory 120 and communicating with peripheral interface 140 in consecutive column access commands directed to different ranks and/or banks.

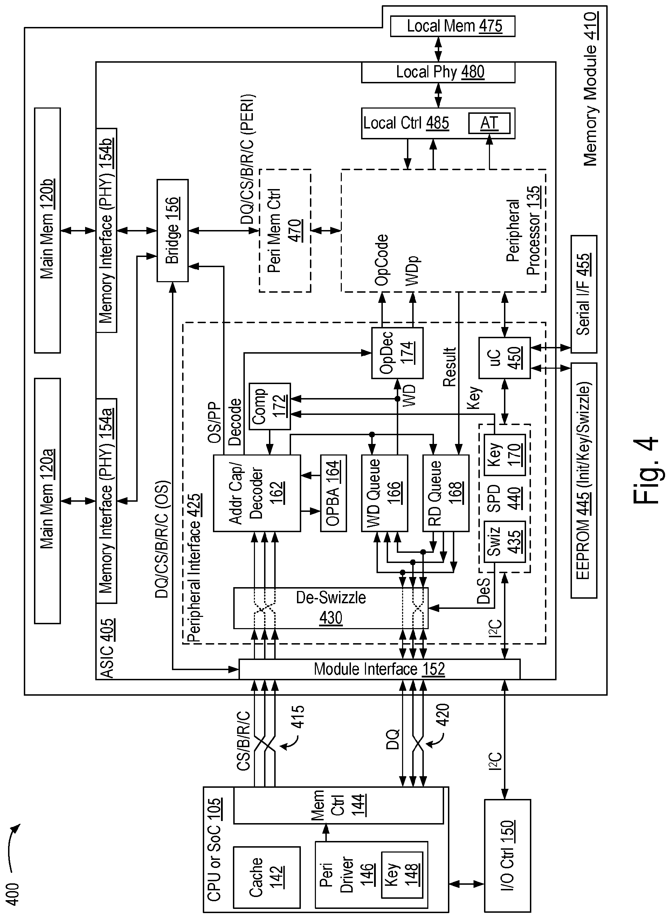

Figure 4 depicts a memory system 400 in accordance with another embodiment. System 400 includes features in common with system 100 of Figure 1, with like-identified elements being the same or similar. Discussions of common features are largely omitted here for brevity. In particular, in the embodiment illustrated in Figure 4, main memory 120 is divided into two portions 120a/120b which are coupled to ASIC 405 via memory interfaces 154a/154b, respectively.

System 400 includes CPU 105 and a memory module 410 interconnected by a main-memory interface that includes a command/address bus 415 and a data bus 420, each of which includes a number of parallel channels. Command/address bus 415 conveys chip-select, bank, row, and column (CS/B/R/C) address signals, and data bus 420 conveys data signals DQ. Buses 415 and 420 are both shown to include signal conductors that switch positions en route to module 410. The crossings illustrate signal-routing choices made in some systems to simplify part placement and trace routing on the printed-circuit board (e.g., motherboard) supporting CPU 105 or to improve signal integrity by reducing trace length or stub length. For memory operations, some bit positions of data, or of addresses, can often be switched without affecting circuit performance providing the switching applies to both reads and writes. Some signal traces may therefore be routed in a manner that is more convenient or efficient without introducing logic errors-as long as the memory module does nothing but stores and reads. This common practice is sometime referred to as "swizzling."

Swizzled data or address lines that do not affect main-memory accesses may nevertheless interfere with commands to peripheral interface 425. Swapping data bits may, for example, change an opcode embedded in write data for peripheral processor 135. Peripheral interface 425 therefore includes a programmable de-swizzling circuit 430 and associated swizzle register 435, the latter of which may be connected to or part of some serial-presence-detect (SPD) logic 440. Before module 410 is placed in system 400, an EEPROM 445 or other memory is programmed with swizzle information for the motherboard, the key for register 170, and other initialization information (the EEPROM can also be programmed by the system the first time the module is connected, or swizzle register 435 can be explicitly loaded by the system after each reset). A microcontroller 450 then loads registers 405 and 170 as part of an initialization routine that calibrates, e.g., the module and memory interfaces. De-swizzling circuit 430 thus counteracts on-board swizzling responsive to a de-swizzle signal DeS from register 435 by reordering the module data received concurrently at the module interface.

A conventional serial interface 455 provides test and control access to controller 450. Peripheral interface 425 otherwise operates as described above in connection with Figure 1, so a detailed treatment is omitted here. The information in EEPROM 445 includes boot code that can be executed by controller 450 so that when system 400 completes a power-on reset the module and memory interfaces 152, 154, and 480 are calibrated. These calibration procedures can be transparent to CPU 105.

De-swizzling circuit 430 is not shown as affecting memory traffic between the module interface 152 and bridge circuit 156. In an alternate embodiment, all memory traffic is "de-swizzled," such that data stored in main memory can be directly accessed by the peripheral processor in a consistent storage format.

To the right of interface 425, peripheral processor 135 interfaces with a peripheral memory controller 470, which manages access to main memory 120 for processor 135 in the same manner that memory controller 144 manages access for CPU 105.

Peripheral processor 135 has access to additional peripheral local memory device(s) 475 in this embodiment, and gains and manages access via a local physical interface 480 and controller 485. Local controller 485 may include support for address translation between an addressing scheme employed by main memory and one specific to the local memory. Peripheral memory controller 470 may likewise include support for address translation depending upon the needs of processor 135.

Peripheral memory device(s) 475 might be, e.g., high performance but have a smaller addressable space relative to main memory to support improved peripheral performance. Peripheral processor 135 may, for example, execute peripheral graphics instructions stored in peripheral memory device(s) 475. Rather than or in addition to graphics processing, peripheral functions can include network support, data compression/decompression, encryption/decryption, scientific computation, etc. Different memory modules can support the same or different types of peripheral processing, or only a subset of the modules may include such support. The operands for the peripheral functions can be provided as or derived from peripheral write data WDp.

Figure 5 depicts a memory module 500 in accordance with an embodiment that supports peripheral-command broadcasting and configurable data widths. Memory module 500 is similar to module 110 of Figure 1, with like-identified elements being the same or similar. Module 500 differs from module 110 in that its embodiment of a peripheral interface 505 includes a peripheral-select-bit (PSB) decoder 510 that allows peripheral interface 505 to determine whether broadcast peripheral commands are directed to the resident processor 135. This aspect of module 500 has been detailed in the related applications referenced herein. Module 500 also differs from module 110 in that its bridge 515 is configurable, based on a control input from a serial-presence detect (SPD) memory 520, to communicate data of width eight, sixteen, thirty-two, or sixty-four via all or a subset of data lines DQ[63:0]. Modules that support multiple data widths can be used, e.g., to implement Dynamic Point-to-Point (DPP) memory architectures. Briefly, DPP architectures combine the performance benefits of point-to-point signaling with the flexibility of multi-drop topologies. Module 500 combines support for DPP with the ability to accomplish peripheral processes in the manner detailed previously. SPD memory 520 is initialized at start-up, using well known techniques, to select the desired width.

Command broadcasting, in this context, refers to the simultaneous delivery of the same command to multiple peripheral processors instantiated on the same or different modules. It is sometimes desirable to break up a job into multiple similar tasks and execute each on a separate peripheral processor. In video processing, for example, a technique known as split frame rendering allocates a rending process to be performed on a single video frame among multiple graphics processors. The processors work in parallel on different subsets of the frame to expedite the rendering process. Such parallel processing can be used to advantage in many areas beyond graphics. A memory system with multiple instances of module 500 can broadcast the same command to multiple modules in support of parallel processing. In some embodiments commands can specify one or more target processor, and can thus be conveyed to one or any combination of multiple peripheral processors.

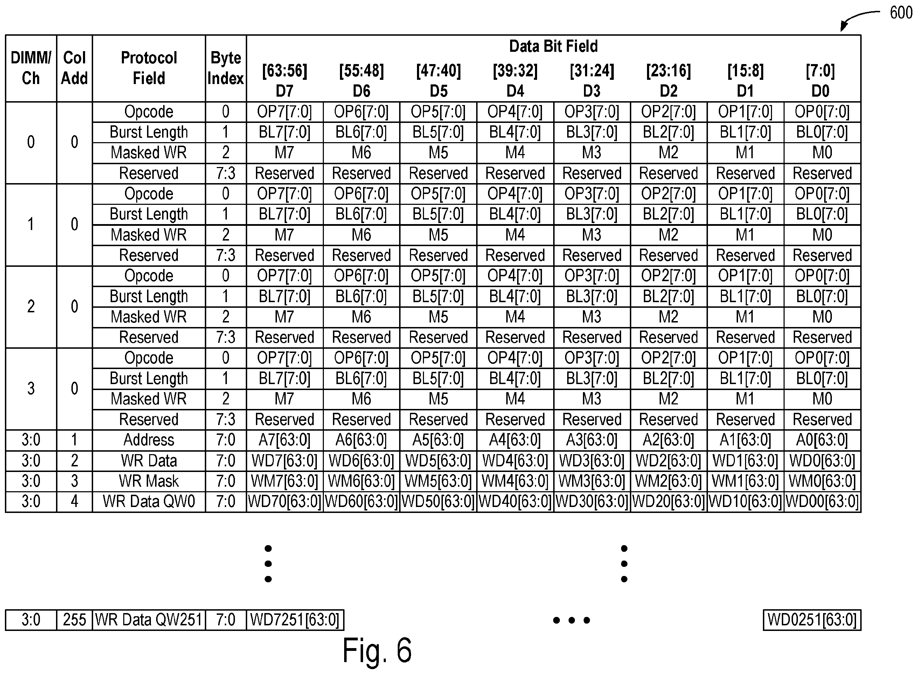

Figure 6 illustrates a data structure 600 that a peripheral driver (e.g., driver 146 of Figure 1) assembles and stores in a cache to convey instructions and data to the OPBA command ports of thirty-two modules 500, eight x8 modules on each of four memory channels. The modules are dual in-line memory modules (DIMMs) in this example, but other module types can also be used. Some embodiments additionally support PSB bit fields in support of broadcast commands in the manner detailed in connection with Figure 5.

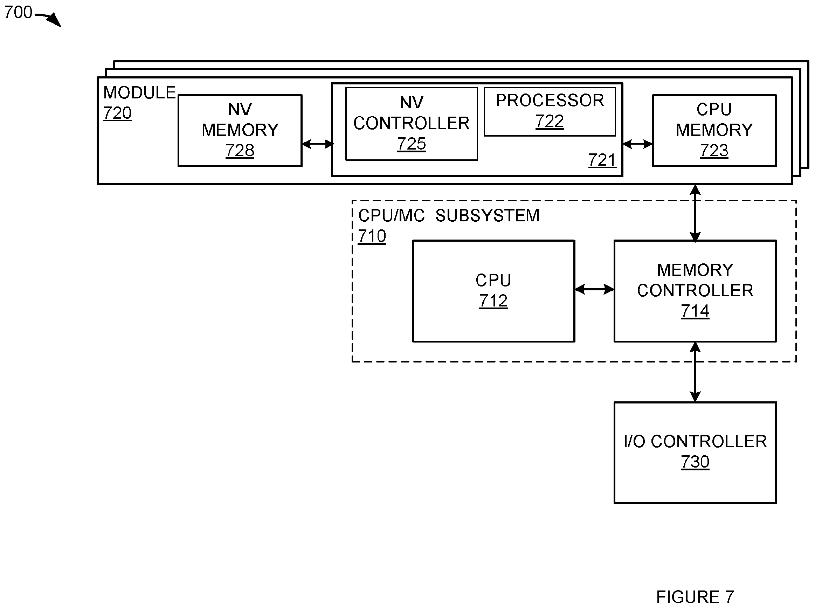

Figure 7 is an illustration of a hybrid flash/DRAM memory module. In Figure 7, computer system 700 comprises CPU/memory controller subsystem 710, I/O controller 730, and memory modules 720. CPU/memory controller subsystem 710 includes a CPU 712 coupled to a memory controller 714. One or more memory modules 720 are coupled to memory controller 714 in subsystem 710. Each memory module 720 includes integrated circuit (IC) device 721, CPU memory 723 (a.k.a., main memory), and nonvolatile memory 728. IC 721 includes a nonvolatile memory controller 725 and processor 722. Processor 722 may be part of a buffer device. Processor 722 may be or comprise a microprocessor, finite state machine, or other logic circuitry that is part of a buffer device. Memory 723 typically contains instructions and/or data used by the CPU 712 and/or IC 721. It should be understood that CPU 712 may include multiple processor cores. CPU 712 may include stacked die devices having one or more processors and/or memory stacked using, for example, though-silicon vias. CPU 712 may include and/or be a specialized processor such as, for example, a digital signal processor, graphics processing unit (GPU), an array processor, storage management processor, data analytic processor (e.g., Hadoop distributed file system processor or a MapReduce processor), pattern recognition processor, and/or image manipulation processor (i.e., image processor). CPU 712 can divide up and coordinate compute processes and tasks among modules 720.

IC 721 may also be referred to as a "compute engine," "computing engine," "graphics processor," "rendering engine," "processing unit," "accelerator", "offload engine," and/or GPU. IC 721 may include and/or be a heterogeneous processing unit that includes the functions of one or more of a CPU, GPU, video processor, etc. IC 721 may include, or be, a serial-ATA (SATA), serial attached SCSI (SAS), eSATA, PATA, IEEE 1394, USB (all revisions), SCSI Ultra, FiberChannel, Infiniband, Thunderbolt, or other industry standard I/O interfaces (such as PCI-Express-PCIe). IC 721 may include, or be, a network processor unit (NPU) such as a TCP offload engine (TOE), a protocol translator (e.g., TCP over SATA, TCP over PCI-Express, accelerated SCSI interconnect, etc.), and/or a protocol packet translator. IC 721 may include, or be, a fixed function graphics processing unit, an encryption/decryption accelerator/offload engine (e.g., for implementing/accelerating SSL, AEC, DEC, etc.), a compressor/decompressor, a regular expression accelerator engine, a digital signal processor (DSP), a signal path processor, a Fourier transform processor, an inverse Fourier transform processor, and/or a media format encoder/decoder (e.g., JPEG, DVX, AVI, MP2, MP3, MP4, Blu-ray, HD-DVD, DVD, etc.). It should also be understood that module 720 may be coupled to a local SSD/HDD and/or enterprise storage type systems such as external disks, external disk arrays, JBODs, RAID arrays, tape drives, optical drives, and the like.

Memory 723 typically includes multiple memory devices coupled together to form a block of storage space. Memory 723 may be, or comprise, but is not limited to, SRAM, DDR3, DDR4, DDR5, XDR, XDR2, GDDR3, GDDR4, GDDR5, LPDDR, and/or LPDDR2 and successor memory standards and technologies. Memory 723 may be or comprise a stack of devices such as a through-silicon-via (TSV) stack and/or a hybrid memory cube (HMC). Further information about HMC is available from the Hybrid Memory Cube Consortium (http://hybridmemorycube.org/).

Each IC 721 is capable of performing various memory access and/or data processing functions. For the embodiment shown in Figure 7, memory controller 714 is also coupled to an I/O controller 730 which controls the flow of data into and out of the system. An optional video input port (not shown in Figure 7) can provide data to memory controller 714. A display interface (not shown in Figure 7) can provide data output to one or more devices (such as display devices or storage devices). For systems which support video input or capture capability, a video input port on the memory controller 714 is one way to handle the delivery of video source data. Another means of delivery of video input data to the system would include delivering the data from a peripheral module through the I/O controller 730 to memory controller 714.

In the example of Figure 7, CPU/memory controller subsystem 710 is coupled to multiple distinct memory modules 720. Each memory module 720 includes IC 721, and nonvolatile memory 728. IC 721 may be or comprise a microprocessor, finite state machine, or other logic circuitry that is part of a buffer device. Each IC 721 is capable of performing various data processing functions. Thus, the IC 721 on different (or the same) memory modules are capable of performing different processing functions simultaneously (i.e., parallel processing). The IC 721 on different (or the same) memory modules are capable of performing vector parallel processing where functions are vectorized and divided among the IC's 721. The IC 721 on different (or the same) memory modules are capable of performing cluster parallel processing where the IC's 721 cooperate to work on the same problem simultaneously (or concurrently). Further, each IC 721 is capable of communicating with other IC 721 on other memory modules 720.

Each IC 721 is capable of communicating with other ICs 721 on other memory modules 720 with the aid of CPU 712 and/or memory controller 714. Modules 720 and/or IC 721 may be heterogeneous. In other words, modules 720 and/or ICs 721 may not all be identical. ICs 721 may include multiple processor cores that are not all identical. For example, ICs 721 may comprise a mix of CPU type and GPU type processing cores. Modules 720 and/or ICs 721 may perform different functions at the same time. Modules 720 and/or ICs 721 may be produced by different vendors. Modules 720 and/or ICs 721 produced by different vendors may be added, subtracted, and used interchangeably in a plug-and-play manner. Modules 720 and/or ICs 721 may function in parallel running independent (and non-independent) copies of software, processes, applications, and operating systems similar to how virtual machines operate.

CPU 712 can control memory controller 714 to distribute particular processing tasks (such as graphical processing tasks, Hadoop, and/or MapReduce tasks) to ICs 721, and can perform certain processing tasks itself. These tasks may include data to be processed and/or instructions to be executed. These tasks may include executing all or parts of applications, drivers, software layers, runtime functions, and/or operating system code. Although three memory modules 720 are shown in Figure 7, an alternate system may contain any number of memory modules coupled to one or more memory controllers 714. The ability to add and remove memory modules 720 can provide an upgradeable and scalable memory and computing architecture. In addition, it should be understood that the modules in system 700 may be heterogeneous. In other words, a portion of a set of memory modules 720 in a system 700 may be hybrid flash/DRAM type modules, and others may be other types of modules (e.g., entirely DRAM, entirely storage, and/or entirely nonvolatile memory). System 700 can support mixed types of modules. It should also be understood that the hybrid flash/DRAM type modules 720 are an example that illustrates that there can be nonvolatile, high-capacity (i.e., higher than DRAM modules) storage accessed via a memory channel. A particular module 720 can be, for example, an all-flash module, or even newer storage class memories that may or may not include DRAM on the module.

CPU 712 may communicate with IC 721 by reading from, and writing to, an address aperture associated with module 720. CPU 712 can be configured to use any cache policy supported by processor CPU 712 to read from, and write to, this address aperture (or portions thereof). However, it should be understood that, in an embodiment, the most useful cache policies may be limited to configuring the address aperture (or portions thereof) to be treated by CPU 712 as uncacheable memory (UC), write combining memory (WC), or write back (WB). In an embodiment, these cache policies may be combined with the use of certain instructions (e.g., fence instructions, streaming load instructions, and/or streaming write instructions) to achieve an optimal (e.g., highest) communication bandwidth between CPU 712 and IC 721. In addition, when the address aperture (or portions thereof) are configured to be treated as WC or WB, at least a minimum burst size may be used to achieve an optimal (e.g., highest) communication bandwidth between CPU 712 and IC 721. In other words, small burst sizes (e.g., less than a certain, implementation dependent, number of column addresses per burst) may result in less than optimal communication bandwidth between CPU 712 and IC 721. Larger sizes (e.g., greater than a certain, implementation dependent, number of column addresses per burst) may approach (or approximate) an optimal (e.g., highest) communication bandwidth between CPU 712 and IC 721. It should be understood that computer system 700 may utilize a unified memory architecture or a non-unified memory architecture. Computer system 700 is not limited to heterogeneous memory. Further, it should also be understood that computer system 700 (and CPU 712, in particular) may utilize a cache or caching policies that are coherent or not coherent.

It may also be useful to configure the address aperture (or portions thereof) to be UC for testing, ease of implementation, and/or when the bandwidth between CPU 712 and IC 721 is not a relatively high priority. Configuring the address aperture (or portions thereof) to be WB may be most useful for testing purposes. Configuring the address aperture (or portions thereof) to be WC may, in some embodiments, result in the highest bandwidth between CPU 712 and IC 721.

In an embodiment, CPU 712 communicates with IC 721 by reading from, and writing to, an address aperture associated with module 720. This address aperture may be further divided into address ranges (a.k.a. ports) that are configured for communication of commands, status, and data. The ports of the address aperture may be configured and sized as blocks of addresses (e.g., column addresses).

In an embodiment, the operating system running on computer 700 may produce I/O commands that are directed to block I/O and/or storage type devices. One or more of these block I/O or storage type devices may correspond to, or have, stored data that resides on a memory module 720. In response to a block I/O or storage command for data stored on memory module 720, CPU 712 may direct a memory interface command to memory module 720 by reading from, and/or writing to, an address aperture associated with module 720.

To produce I/O commands that are directed to block I/O or storage type devices, the operating system kernel running on computer 700 may direct block device commands to a generic block layer. In response to these block device commands, the operating system may translate the block device commands which were directed to the generic block layer into the memory interface commands that are sent to memory module 720.

Processor 722 may execute all or part of a block storage I/O driver that services the block I/O storage type device commands for data stored in nonvolatile memory 728. Nonvolatile memory controller 725 may be or include a solid-state disk controller that provides a block I/O storage interface to processor 722. This block I/O storage interface can be used for the communication of data to and from nonvolatile memory 728. This block I/O storage interface may use, for example, SCSI or ATA commands.

In an embodiment, module 720 may be configured to service RPC requests for block I/O storage type device commands using nonvolatile memory 728. These RPC requests may be received by a module 720 via the DRAM memory channel that operatively couples memory controller 714 to the module 720. The RPC requests that are serviced by a module 720 may originate from a processor (not shown in Figure 7) that is not directly connected to the module 720 (e.g., a remote processor on a network).

Procedure calls and procedure data received by a module 720 via the DRAM memory channel may be executed on the module 720 (e.g., by processor 722 and/or nonvolatile memory controller 725). These procedure calls and the procedure data may be communicated to a module 720 via memory write transactions addressed to a memory space (e.g., aperture) of the module 720. These procedure calls may include RPC requests. Procedure calls and procedure data executed by module 720 may implement one or more virtual file system procedure calls. Nonvolatile memory 728 may be accessed using NFS requests that are communicated to module 720 via memory write transactions addressed to a memory space of the module 720. Nonvolatile memory 728 may be accessed using HDFS requests that are communicated to module 720 via memory write transactions addressed to a memory space of the module 720.

Procedure calls received by a module 720 via the DRAM memory channel may be executed on the module 720. These procedure calls may include block I/O storage type device commands that are serviced using nonvolatile memory 728. These procedure calls may include map calls that specify an application-specific map operation to be performed by the module on a respective input data block to be stored using nonvolatile memory 728. The map operation may also produce intermediate data values to be stored using nonvolatile memory 728.

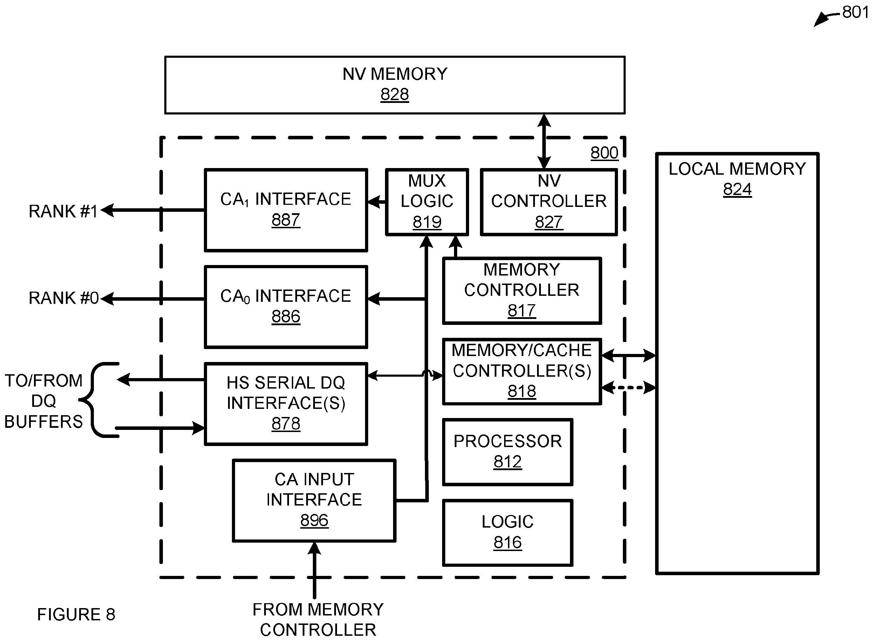

Figure 8 is a block diagram illustrating a hybrid flash/DRAM compute subsystem. In Figure 8, subsystem 801 comprises subsystem 800, local memory 824, and nonvolatile memory 828. Subsystem 800 comprises processor 812, logic 816, memory controller 817, CA input interface 896, multiplexor (MUX) logic 819, CA0 interface 886, CA1 interface 887, HS serial DQ interface(s) 878, and nonvolatile memory controller 827. Subsystem 800 also includes memory/cache controller(s) 818. Memory/cache controller 818 is operatively coupled to local memory 824. Local memory 824 may include a cache memory partition and a processor memory partition. Local memory 824 may be operatively coupled to subsystem 800 by one or more memory channels. It should be understood that subsystem 801 may be included on a memory module 720. Thus, it can be seen that subsystem 800 may be used as IC 721 in a memory module 720 and that subsystem 801 may be disposed on memory modules 720.

In an embodiment, a memory module having subsystem 801 (e.g., memory modules 120) can have a memory interface configured to connect with a memory controller. Subsystem 800 may be an integrated circuit device that is coupled to the memory interface. Subsystem 800 includes processor 812, CA1 interface 887, nonvolatile memory controller 827, and an interface to nonvolatile memory 828. CA1 interface 887 is configured to connect to a first type of dynamic memory integrated circuit devices. Nonvolatile memory controller 827 is coupled to processor 812. The interface to nonvolatile memory 828 is configured to couple nonvolatile memory controller 827 to at least one nonvolatile memory integrated circuit device. A plurality of the first type of dynamic memory integrated circuit devices is coupled to CA1 interface 887. At least one nonvolatile memory integrated circuit device is coupled to subsystem 800 via the interface to nonvolatile memory 828.

Subsystem 801 may also include a local memory 824. This local memory 824 may comprise at least one of a second type of dynamic memory integrated circuit device. Local memory 824 may connect to subsystem 800 via an interface. This interface may couple local memory 824 to processor 812 via memory/cache controller 818. Local memory 824 may be used to cache data stored in the dynamic memory integrated circuit devices coupled to CA1 interface 887. Subsystem 801 may include an SSD controller coupled to processor 812 and nonvolatile memory controller 827. Subsystem 801 may include a SATA controller coupled to processor 812 and nonvolatile memory controller 827. Nonvolatile memory 828 may store an operating system that processor 812 can boot up and execute. This operating system may be a different operating system than, for example, CPU 812 boots and runs. The memory module may receive instructions via the memory interface that cause processor 812 to perform operations on data. Subsystem 800 may return the results of these operations via the memory interface.

In an embodiment, a memory module having subsystem 801 (e.g., memory modules 120) can have a memory interface to connect to a memory channel. This memory module may include a plurality of dynamic memory integrated circuits. The memory module may have a nonvolatile memory 828 comprising at least one nonvolatile memory integrated circuit device. The memory module may include subsystem 800. Subsystem 800 includes processor 812, CA1 interface 887, NV controller 827, and CA input interface 896, and High-speed (HS) serial DQ interface 878. CA1 interface 887 is coupled to the plurality of dynamic memory integrated circuits. NV controller 827 is coupled to nonvolatile memory 828 via an interface.

In an embodiment, subsystem 800 receives a memory command from a memory controller coupled to CA input interface 896. In response to this memory command, subsystem 800 stores data in the plurality of dynamic memory integrated circuits coupled to CA1 interface 887 and/or a plurality of dynamic memory integrated circuits coupled to CA0 interface 886. In response to a command from processor 812, subsystem 800 stores data in nonvolatile memory 828.

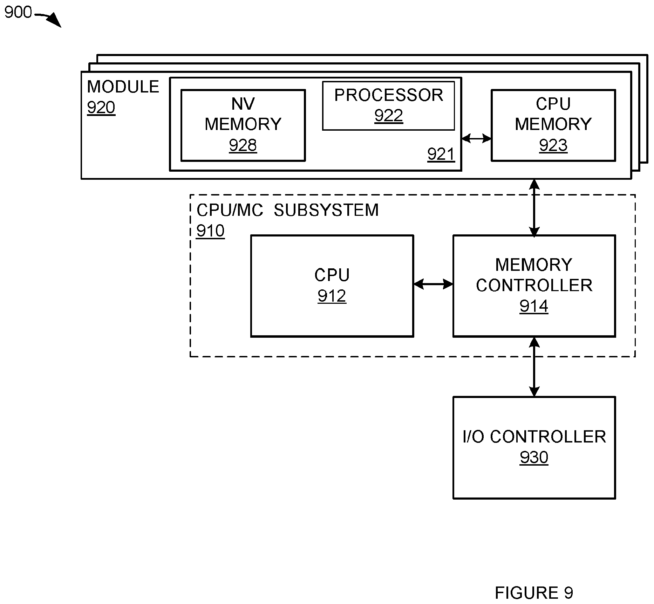

Figure 9 is an illustration of a hybrid flash/DRAM memory module. In Figure 9, computer system 900 comprises CPU/memory controller subsystem 910, I/O controller 930, and memory modules 920. CPU/memory controller subsystem 910 includes CPU 912 coupled to memory controller 914. One or more memory modules 920 are coupled to memory controller 914 in subsystem 910. Each memory module 920 includes integrated circuit device 921 and CPU memory 923. Integrated circuit device 921 includes nonvolatile memory 928 and processor 922. CPU memory 923 typically contains instructions and/or data used by the CPU 912. CPU memory 923 can be dynamic memory integrated circuits. Integrated circuit device 921 can include other functionality. Accordingly, it should be understood that integrated circuit device 921 may correspond to IC 721 and/or nonvolatile memory 728 on memory module 720 or subsystem 800, and that module 920 may be an embodiment of memory module 720.

Since nonvolatile memory 928 is included in integrated circuit device 921, nonvolatile memory 928 may be accessed directly by a processor 922. Integrated circuit device 921 may include an SATA interface. Processor 922 and/or integrated circuit device 921 and an SSD on integrated circuit device 921 may communicate via an SATA interface. Module 920 may include a SATA connector for communicating with an SSD/HDD external to the module 920.

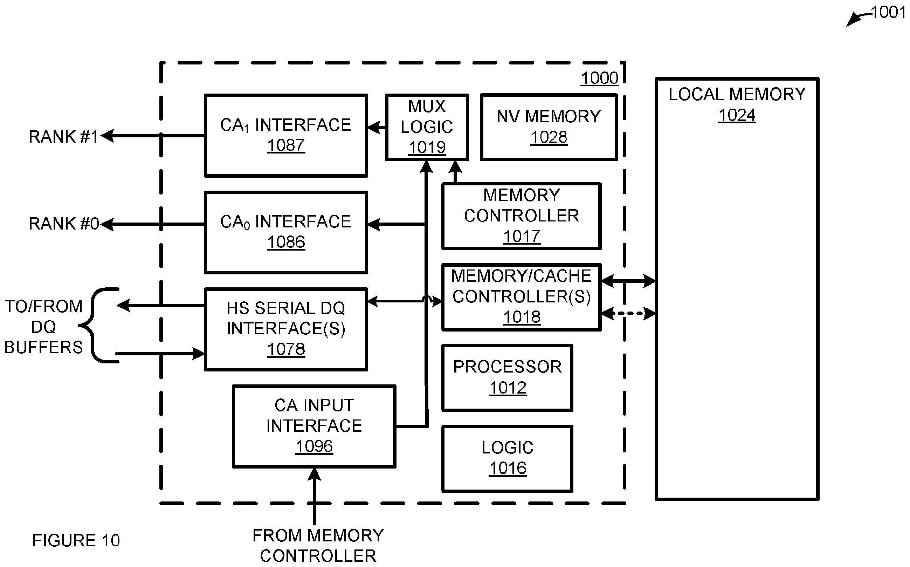

Figure 10 is a block diagram illustrating a hybrid flash/DRAM compute subsystem. Figure 10 is a block diagram illustrating a hybrid flash/DRAM memory module compute subsystem. In Figure 10, subsystem 1001 comprises subsystem 1000 and local memory 1024. Subsystem 1000 comprises processor 1012, logic 1016, memory controller 1017, CA input interface 1096, multiplexor (MUX) logic 1019, CA0 interface 1086, CA1 interface 1087, high-speed (HS) serial DQ interface(s) 1078, and nonvolatile memory 1028. Subsystem 1000 also includes memory/cache controller(s) 1018. Memory/cache controller 1018 is operatively coupled to local memory 1024. Local memory 1024 may be operatively coupled to subsystem 1000 by one or more memory channels. It should be understood that subsystem 1001 may be included on a memory module 920. Thus, it can be seen that subsystem 1000 may be used as IC 721 in memory module 720, or as IC 921 in memory module 920, and that subsystem 1001 may be disposed on memory modules 720, and/or 920.

In an embodiment, a memory module having subsystem 1001 (e.g., memory modules 120 and/or 320) can have a memory interface configured to connect with a memory controller. Subsystem 1000 may be an integrated circuit device that is coupled to the memory interface. Subsystem 1000 includes a processor 1012, CA1 interface 1087, and nonvolatile memory 1028. CA1 interface 1087 is configured to connect to a first type of dynamic memory integrated circuit devices. Nonvolatile memory 1028 is coupled to processor 1012. A plurality of the first type of dynamic memory integrated circuit devices is coupled to CA1 interface 1087.

Subsystem 1001 may also include a local memory 1024. This local memory 1024 may comprise at least one of a second type of dynamic memory integrated circuit device. Local memory 1024 may connect to subsystem 1000 via an interface. This interface may couple local memory 1024 to processor 1012 via memory/cache controller 1018. Local memory 1024 may be used to cache data stored in the dynamic memory integrated circuit devices coupled to CA1 interface 1087. Nonvolatile memory 1028 may store an operating system that processor 1012 can boot up and execute. The memory module may receive instructions via the memory interface that cause processor 1012 to perform operations on data. Subsystem 1000 may return the results of these operations via the memory interface.

In an embodiment, a memory module having subsystem 1001 (e.g., memory modules 120, and/or 320) can have a memory interface to connect to a memory channel. This memory module may include a plurality of dynamic memory integrated circuits. The memory module may include subsystem 1000. Subsystem 1000 includes processor 1012, CA1 interface 1087, CA input interface 1096, High-speed (HS) serial DQ interface 1078, and nonvolatile memory 1028. CA1 interface 1087 is coupled to the plurality of dynamic memory integrated circuits.

In an embodiment, subsystem 1000 receives a memory command from a memory controller coupled to CA input interface 1096. In response to this memory command, subsystem 1000 stores data in the plurality of dynamic memory integrated circuits coupled to CA1 interface 1087 and/or a plurality of dynamic memory integrated circuits coupled to CA0 interface 1086. In response to a command from processor 1012, subsystem 1000 stores data in nonvolatile memory 1028.

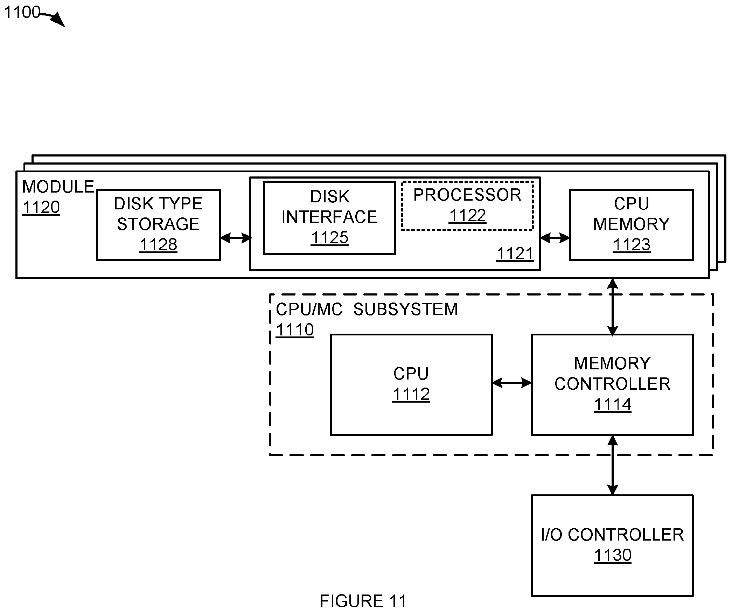

Figure 11 is an illustration of a hybrid disk type nonvolatile storage and DRAM memory module. Figure 11 is an illustration of a hybrid disk type nonvolatile storage and DRAM memory module. In Figure 11, computer system 1100 comprises CPU/memory controller subsystem 1110, I/O controller 1130, and memory modules 1120. CPU/memory controller subsystem 1110 includes CPU 1112 coupled to memory controller 1114. One or more memory modules 1120 are coupled to memory controller 1114 in subsystem 1110. Each memory module 1120 includes integrated circuit device 1121, CPU memory 1123, and disk type storage 1128. Integrated circuit device 1121 includes a disk interface 1125 and processor 1122. CPU memory 1123 typically contains instructions and/or data used by the CPU 1112. Disk type storage 1128 typically contains instructions and/or data used by CPU 1112 and/or processor 1122. CPU memory 1123 can be dynamic memory integrated circuits. Integrated circuit device 1121 can include other functionality. Accordingly, it should be understood that integrated circuit device 1121 may correspond to IC 721 in memory module 720, IC 921 in memory module 920 or subsystems 800, and/or 900 and that module 1120 may be an embodiment of memory modules 720 and/or 920.

The module 1120 illustrated in Figure 30 includes disk type storage 1128. Disk type storage may be, or include, but is not limited to, a solid-state disk drive, flash memory controlled and organized as a disk type mass storage device (e.g., a USB memory stick), or a small form-factor magnetic disk drive (e.g., a 1.8" or smaller hard disk drive).

Disk interface 1125 manages/controls disk type storage 1128. Thus, module 1120 can have a combination of DRAM and disk type storage 1128. Disk interface 1125 may include (or be) an SSD controller (with or without an additional processor). Disk interface 1125 on module 1120 may be accessed by CPU 1112 via the memory channel which typically has higher bandwidth than an I/O bus.

Disk type storage 1128 may be accessed directly by a processor 1122. In other words, disk type storage 1128 may be accessed by a processor 1122 without passing the data/address through memory controller 1114 or relying upon CPU 1112. Disk interface 1125 may be or include an SATA interface. Processor 1122 and/or integrated circuit device 1121 and disk type storage 1128 may communicate via an SATA interface. Module 1120 may include a SATA connector for communicating with an SSD/HDD external to the module 1120.

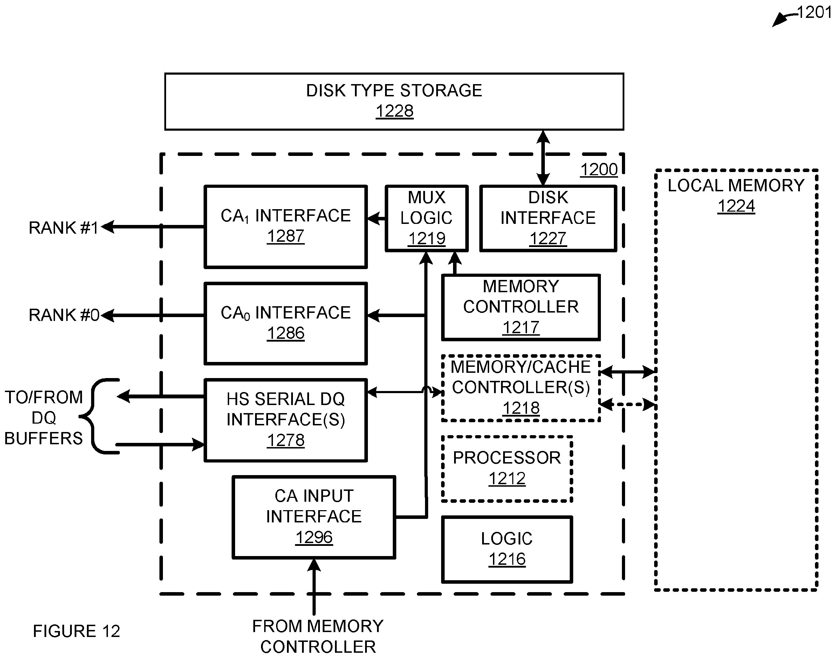

Figure 12 is a block diagram illustrating a hybrid disk type nonvolatile storage and DRAM memory module compute subsystem. In Figure 12, subsystem 1201 may comprise subsystem 1200, optional local memory 1224, and disk type storage 1228. Subsystem 1200 comprises logic 1216, memory controller 1217, CA input interface 1296, multiplexor (MUX) logic 1219, CA0 interface 1286, CA1 interface 1287, HS serial DQ interface(s) 1278, and disk interface 1227. Subsystem 1200 may optionally include processor 1212 and memory/cache controller(s) 1218. If included, memory/cache controller 1218 is operatively coupled to local memory 1224 (if included). Local memory 1224 may be operatively coupled to subsystem 1200 by one or more memory channels. Local memory 1224 may be accessed by one or more memory channels. It should be understood that subsystem 1201 may be included on a memory module 1120. Thus, it can be seen that subsystem 1200 may be used as IC 721 in memory module 720, IC 921 in memory module 920, and/or IC 1121 in memory module 1120 and that subsystem 1201 may be disposed on memory modules 720, 920, and/or 1120.

In an embodiment, a memory module having subsystem 1201 (e.g., memory modules 720, 920, and/or 1120) can have a memory interface configured to connect with a memory controller. Subsystem 1200 may be an integrated circuit device that is coupled to the memory interface. Subsystem 1200 includes CA1 interface 1287 and disk interface 1227. CA1 interface 1287 is configured to connect to a first type of dynamic memory integrated circuit devices. Disk interface 1227 may be coupled to processor 1212 (if present). A plurality of the first type of dynamic memory integrated circuit devices are coupled to CA1 interface 1287. At least one disk type storage device 1228 coupled to subsystem 1201 via the disk interface 1227.

Subsystem 1201 may also include a local memory 1224. This local memory 1224 may comprise at least one of a second type of dynamic memory integrated circuit device. Local memory 1224 may connect to subsystem 1200 via an interface. This interface may couple local memory 1224 (if present) to processor 1212 (if present) via memory/cache controller 1218 (if present). Local memory 1224 may be used to cache data stored in the dynamic memory integrated circuit devices coupled to CA1 interface 1287. Disk type storage 1228 may store an operating system that processor 1212 (if present) can boot up and execute. The memory module may receive instructions via the memory interface that cause processor 1212 (if present) to perform operations on data. Subsystem 1200 may return the results of these operations via the memory interface.

In an embodiment, a memory module having subsystem 1201 (e.g., memory modules 720, 920, and/or 1120) can have a memory interface to connect to a memory channel. This memory module may include a plurality of dynamic memory integrated circuits. The memory module may have disk type storage 1228. The memory module may include subsystem 1200. Subsystem 1200 includes CA1 interface 1287, disk interface 1227, and CA input interface 1296, and High-speed (HS) serial DQ interface 1278. CA1 interface 1287 is coupled to the plurality of dynamic memory integrated circuits. Disk interface 1227 is coupled to disk type storage 1228 via an interface.

In an embodiment, subsystem 1200 receives a memory command from a memory controller coupled to CA input interface 1296. In response to this memory command, subsystem 1200 stores data in the plurality of dynamic memory integrated circuits coupled to CA1 interface 1287 and/or a plurality of dynamic memory integrated circuits coupled to CA0 interface 1286. In response to a command by processor 1212, subsystem 1200 can store data in disk type storage 1228.

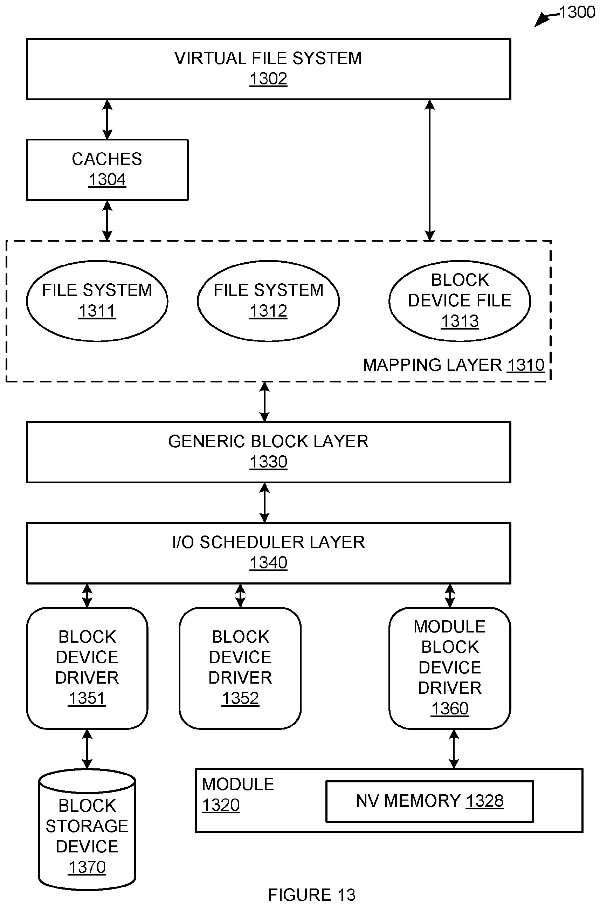

Figure 13 is an illustration of a system for accessing file data stored in nonvolatile memory on a DRAM memory channel. In Figure 13, system 1300 is illustrated as comprised of software and hardware layers. In particular, system 1300 comprises virtual file system (VFS) 1302, caches 1304, mapping layer 1310, generic block layer 1330, I/O scheduler layer 1340, block device driver 1351, block device driver 1352, module block device driver 1360, block storage device 1370, and module 1320. Mapping layer 1310 include file system 1311, file system 1312, and block device file 1313. Module 1320 includes nonvolatile memory 1328. Modules suitable for use as module 1320 include module 720, module 920, and/or module 1120.

Virtual file system 1302 is operatively coupled to caches 1304 and mapping layer 1310. Caches 1304 are operatively coupled to mapping layer 1310. Mapping layer 1310 is operatively coupled to generic block layer 1330. Generic block layer 1330 is operatively coupled to I/O scheduler layer 1340. I/O scheduler layer is operatively coupled to block device driver 1351, block device driver 1352, and module block device driver 1360. Block device driver 1351 is operatively coupled to block storage device 1370. Module block device driver is operatively coupled to module 1320 and is therefore also operatively coupled to nonvolatile memory 1328 to read/write data to/from nonvolatile memory 1328.

In an embodiment, an application or operating system can access data stored in nonvolatile memory 1328 as if that data were stored in a file on a disk drive. A read (or write) service routine call activates a VFS 1302 function which is passed a file descriptor and an offset to a location inside the file. The VFS 1302 function determines if the requested data is already available-for example in cache 1304. If the data is already available, the VFS 1302 can complete the read (or write) operation. If the data is not already available, the VFS 1302 function determines how to perform the operation (e.g., read/write data from/to a block device).

Mapping layer 1310 determines the block size of the file system (e.g, file system 1311, file system 1312) and calculates the extent of the subject data in terms of file block numbers. Mapping layer 1310 invokes a file system specific function that accesses the file's disk inode and determines the location of the requested data in terms of logical block numbers. This location may be passed to the generic block layer 1330.

If the operation is to a raw block device file, mapping layer 1310 does not invoke a file system specific method. Instead, mapping layer 1310 can translate the offset in the block device file to a corresponding location in the storage or storage partition. This location may be passed to the generic block layer 1330.

Using the generic block layer 1330, the kernel issues the operation on the block device. Generic block layer 1330 abstracts the kernel's view of storage accessed as block devices (i.e., block storage device 1370 and module 1320). Generic block layer 1330 informs I/O scheduler layer 1340 of pending I/O data transactions. I/O scheduler layer 1340 sorts and issues pending I/O data transactions to the appropriate block device driver 1351-1352 and/or module block device driver 1360 according to kernel policies.

Block device drivers 1351-1352 send suitable block I/O storage type commands to block storage devices (e.g., block storage device 1370). Module block device driver 1360 may translate the block device commands which were received from I/O scheduler layer 1340 into memory interface commands that are sent to memory module 1320.

A processor on module 1320 may execute all or part of module block device driver 1360 to service block I/O storage type device commands for data stored in nonvolatile memory 1328. The block I/O storage type device commands may include, for example, SCSI or ATA commands.

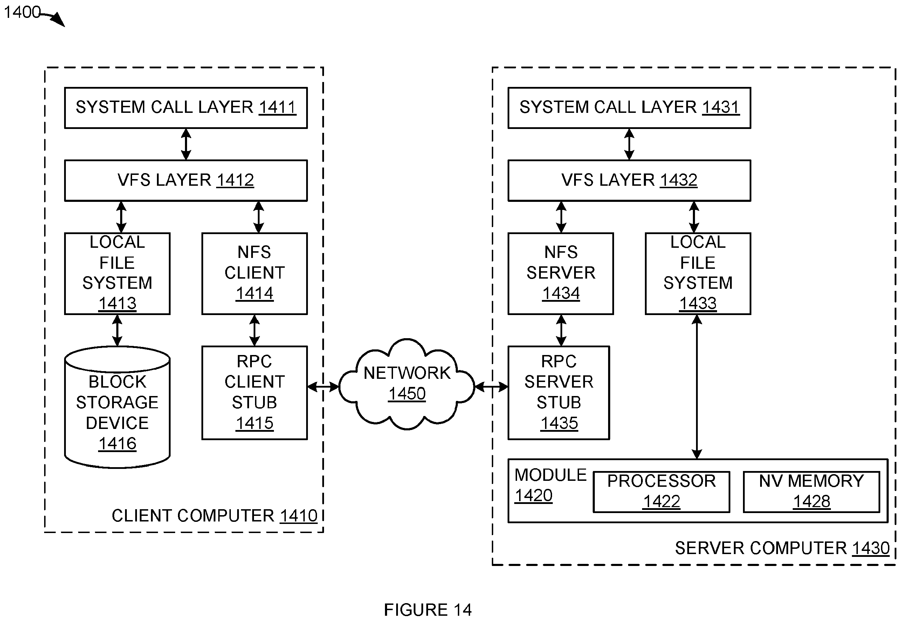

Figure 14 is an illustration of a distributed system for accessing file data stored in nonvolatile memory on a DRAM memory channel. In Figure 14, distributed file system 1400 comprises client computer 1410, server computer 1430, and network 1450. Client computer 1410 includes system call layer 1411, virtual file system layer 1412, local file system 1413, network file system client 1414, block storage device 1416, remote procedure call client stub 1415. Server computer 1430 includes system call layer 1431, virtual file system layer 1432, local file system 1433, network file system server 1434, remote procedure call server stub 1435, and module 1420. Module 1420 includes processor 1422 and nonvolatile memory 1428. It should be understood that module 1420 may be, include, correspond to, or be an embodiment of, one or more of modules 720, 920, or 1120, or include one or more elements of those modules (e.g., IC 721, IC 921, IC 1121, subsystem 800, subsystem 1000, and/or subsystem 1200), described herein.

System call layer 1411 of client computer 1410 is operatively coupled to VFS layer 1412 of client computer 1410. VFS layer 1412 is operatively coupled to local file system 1413 of client computer 1410 and NFS client 1414. Local file system 1413 is operatively coupled to block storage device 1416 of client computer 1410. NFS client 1414 is operatively coupled to RPC client stub 1415. RPC client stub 1415 is operatively coupled to RPC server stub 1435 of server computer 1430 via network 1450.

System call layer 1431 of server computer 1430 is operatively coupled to VFS layer 1412 of server computer 1430. RPC server stub 1435 of server computer 1430 is operatively coupled to NFS server 1434. NFS server 1434 is operatively coupled to VFS layer 1432. VFS layer 1432 is operatively coupled to local file system 1433 of server computer 1430. Local file system 1433 of server computer 1430 is operatively coupled to module 1420. Accordingly, it should be understood that processor 1422 and/or nonvolatile memory 1428 of module 1420 can be operatively coupled to the elements of client computer 1410 via local file system 1433, VFS layer 1432, NFS server 1434, RPC server stub 1435, and network 1450. In particular, processor 1422 and/or nonvolatile memory 1428 of module 1420 can be operatively coupled to VFS layer 1412 and system call layer 1411 of client computer 1410 via network 1450. Thus, requests to read and/or write data received by system call layer 1411 can be serviced by nonvolatile memory 1428 on module 1420 of server computer 1430.

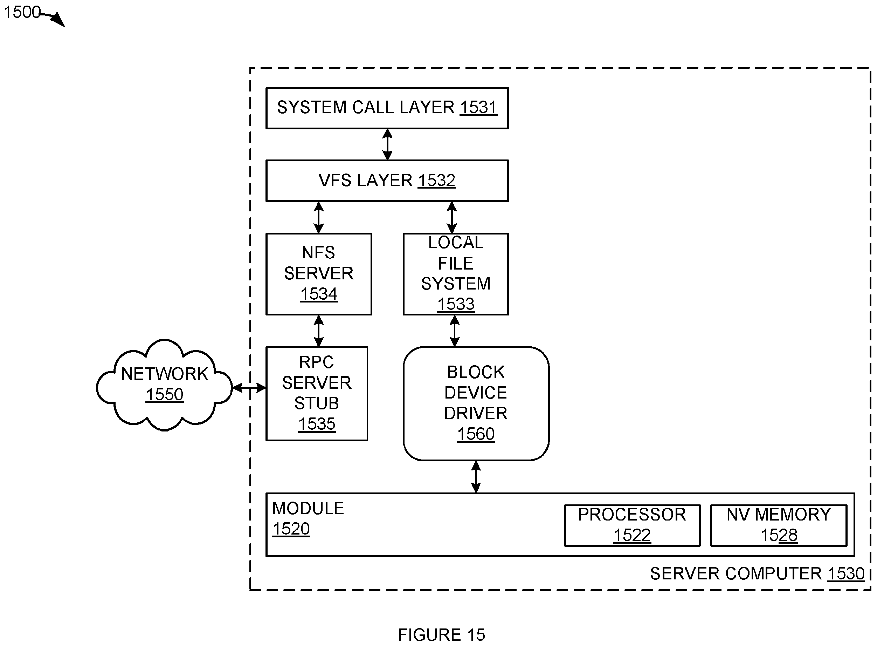

Figure 15 is an illustration of a system for remotely accessing file data stored in nonvolatile memory on a DRAM memory channel using block I/O storage type device commands. In Figure 15, distributed file system 1500 is illustrated including server computer 1530 and network 1550. Not shown in Figure 15 are client computers that would operatively couple to server computer 1530 via network 1550.

Server computer 1530 includes system call layer 1531, virtual file system layer 1532, local file system 1533, network file system server 1534, remote procedure call server stub 1535, block device driver 1560, and module 1520. Module 1520 includes processor 1522 and nonvolatile memory 1528. It should be understood that module 1520 may be, include, correspond to, or be an embodiment of, one or more of modules 720, 920, or 1120, or include one or more elements of those modules (e.g., IC 721, IC 921, IC 1121, subsystem 800, subsystem 1000, and/or subsystem 1200), described herein.

System call layer 1531 of server computer 1530 is operatively coupled to VFS layer 1532. RPC server stub 1535 of server computer 1530 is operatively coupled to NFS server 1534. NFS server 1534 is operatively coupled to VFS layer 1532. VFS layer 1532 is operatively coupled to local file system 1533. Local file system 1533 is operatively coupled to block device driver 1560. Block device driver 1560 is operatively coupled to module 1520. Accordingly, it should be understood that processor 1522 and/or nonvolatile memory 1528 of module 1520 can be operatively coupled to the elements of client computers via block device driver 1560, local file system 1533, VFS layer 1532, NFS server 1534, RPC server stub 1535, and network 1550.

In an embodiment, local file system 1533 communicates with processor 1522 and/or nonvolatile memory 1528 of module 1520 by reading from, and writing to, an address aperture associated with module 1520. This address aperture may be further divided into address ranges (a.k.a. ports) that are configured for communication of commands, status, and data. The ports of the address aperture may be configured and sized as blocks of addresses (e.g., column addresses).

In an embodiment, local file system 1533 may produce I/O commands that are directed to block device driver 1560. In response to an I/O command for data stored in nonvolatile memory 1528 of memory module 1520, block device driver 1560 may direct a memory interface command to memory module 1520 by reading from, and/or writing to, an address aperture associated with module 1520. Block device driver 1560 may translate I/O commands which block device driver 1560 receives into the memory interface commands that are sent to memory module 1520.

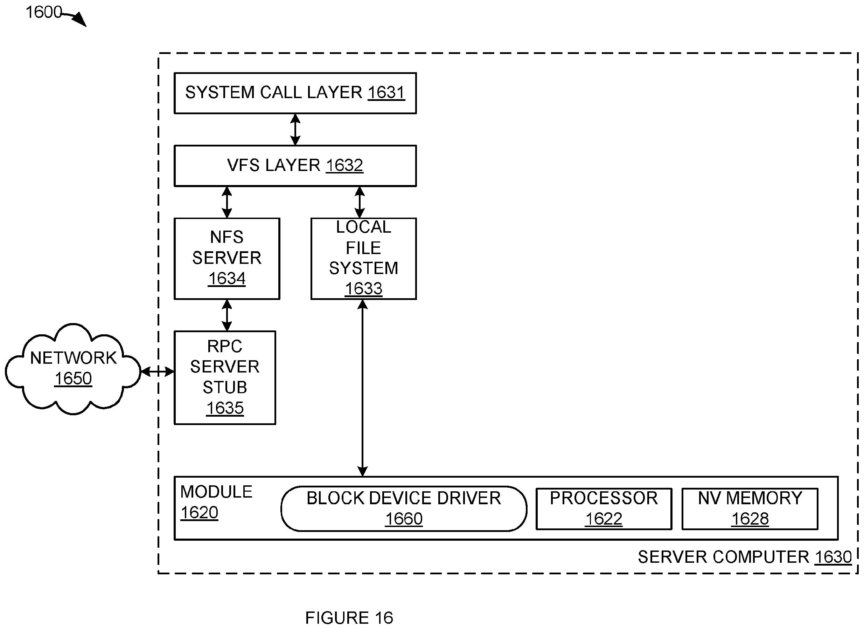

Figure 16 is an illustration of a system for servicing remote requests for data stored in nonvolatile memory on a DRAM memory channel. In Figure 16, distributed file system 1600 is illustrated including server computer 1630 and network 1650. Not shown in Figure 16 are client computers that would operatively couple to server computer 1630 via network 1650.

Server computer 1630 includes system call layer 1631, virtual file system layer 1632, local file system 1633, network file system server 1634, remote procedure call server stub 1635, and module 1620. Module 1620 includes block device driver 1660, processor 1622, and nonvolatile memory 1628. Thus, it should be evident that server computer 1630 is similar to server computer 1530 except for the location of the block device driver. In server computer 1630, all or part of block device driver 1660 resides on, and is executed on, module 1620. Thus, module 1620 can interface with local file system 1633, via a DRAM memory channel, using higher level abstractions. In addition, some of the processing required for servicing requests is handled by module 1620 thus freeing resources on server computer 1630. It should also be understood that module 1620 may be, include, correspond to, or be an embodiment of, one or more of modules 720, 920, or 1120, or include one or more elements of those modules (e.g., IC 721, IC 921, IC 1121, subsystem 800, subsystem 1000, and/or subsystem 1200), described herein.

System call layer 1631 of server computer 1630 is operatively coupled to VFS layer 1632. RPC server stub 1635 of server computer 1630 is operatively coupled to NFS server 1634. NFS server 1634 is operatively coupled to VFS layer 1632. VFS layer 1632 is operatively coupled to local file system 1633. Local file system 1633 is operatively coupled to module 1620 and therefore also operatively coupled to block device driver 1660. Accordingly, it should be understood that processor 1622 and/or nonvolatile memory 1628 of module 1620 can be operatively coupled to the elements of client computers via block device driver 1660, local file system 1633, VFS layer 1632, NFS server 1634, RPC server stub 1635, and network 1650.

In an embodiment, local file system 1633 communicates with block device driver 1660 of module 1620 by reading from, and writing to, an address aperture associated with module 1620, and/or block device driver 1660, in particular. This address aperture may be further divided into address ranges (a.k.a. ports) that are configured for communication of commands, status, and data. The ports of the address aperture may be configured and sized as blocks of addresses (e.g., column addresses).

In an embodiment, local file system 1633 produces I/O commands that are directed to block device driver 1660. In response to an I/O command for data stored in nonvolatile memory 1628 of memory module 1620, memory interface commands are directed to memory module 1620 by reading from, and/or writing to, an address aperture associated with module 1620, and block device driver 1660, in particular. Block device driver 1660 may translate I/O commands that block device driver 1660 receives into commands that are sent to processor 1622 and/or nonvolatile memory 1628.

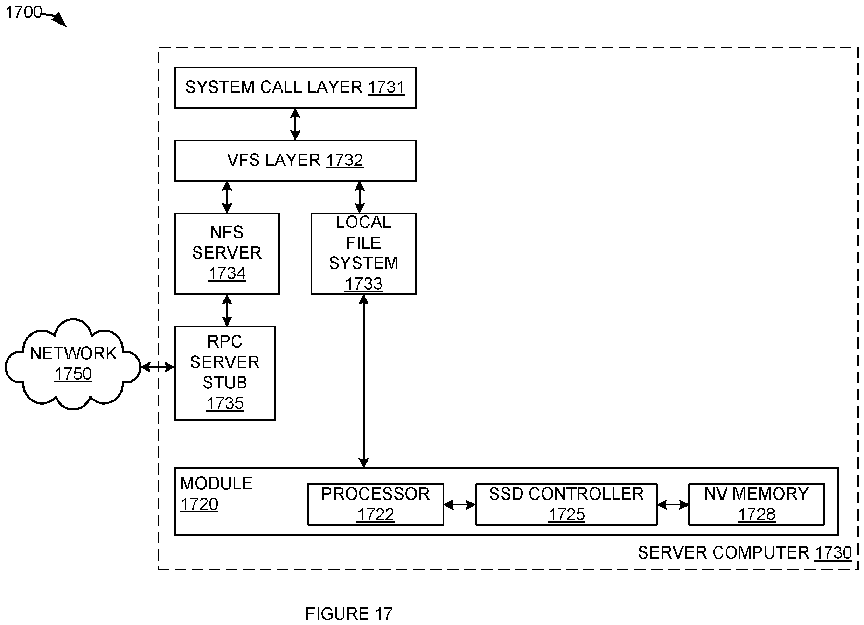

Figure 17 is an illustration of a system for servicing remote requests to a solid-state disk on a DRAM memory channel. In Figure 17, distributed file system 1700 is illustrated including server computer 1730 and network 1750. Not shown in Figure 17 are client computers that would operatively couple to server computer 1730 via network 1750.

Server computer 1730 includes system call layer 1731, virtual file system layer 1732, local file system 1733, network file system server 1734, remote procedure call server stub 1735, and module 1720. Module 1720 includes processor 1722, solid-state disk (SSD) controller 1725, and nonvolatile memory 1728. Thus, it should be evident that server computer 1730 is similar to server computer 1430 and server computer 1530 except that module 1720 explicitly includes SSD controller 1725. SSD controller 1725 provides a block I/O storage interface to processor 1722. This block I/O storage interface can be used for the communication of data to and from nonvolatile memory 1728. This block I/O storage interface may use, for example, SCSI or ATA commands. Processor 1722 may receive commands from local file system 1733 and use SSD controller 1725 and nonvolatile memory 1728 to complete those command. It should also be understood that module 1720 may be, include, correspond to, or be an embodiment of, one or more of modules 720, 920, or 1120, or include one or more elements of those modules (e.g., IC 721, IC 921, IC 1121, subsystem 800, subsystem 1000, and/or subsystem 1200), described herein.

System call layer 1731 of server computer 1730 is operatively coupled to VFS layer 1732. RPC server stub 1735 of server computer 1730 is operatively coupled to NFS server 1734. NFS server 1734 is operatively coupled to VFS layer 1732. VFS layer 1732 is operatively coupled to local file system 1733. Local file system 1733 is operatively coupled to module 1720 and therefore also operatively coupled to processor 1722, SSD controller 1725, and/or nonvolatile memory 1728. Accordingly, it should be understood that processor 1722, SSD controller 1725, and/or nonvolatile memory 1728 of module 1720 can be operatively coupled to the elements of client computers via processor 1722, local file system 1733, VFS layer 1732, NFS server 1734, RPC server stub 1735, and network 1750.

In an embodiment, local file system 1733 communicates with SSD controller 1725 of module 1720 by reading from, and writing to, an address aperture associated with module 1720, and/or SSD controller 1725, in particular. This address aperture may be further divided into address ranges (a.k.a. ports) that are configured for communication of commands, status, and data. The ports of the address aperture may be configured and sized as blocks of addresses (e.g., column addresses).

In an embodiment, local file system 1733 produces I/O commands that are directed to SSD controller 1725. In response to an I/O command for data stored in nonvolatile memory 1728 of memory module 1720, memory interface commands are directed to memory module 1720 by reading from, and/or writing to, an address aperture associated with module 1720, and SSD controller 1725, in particular. Processor 1722 may translate I/O commands that module 1720 receives into commands that are sent to SSD controller 1725 and/or nonvolatile memory 1728.

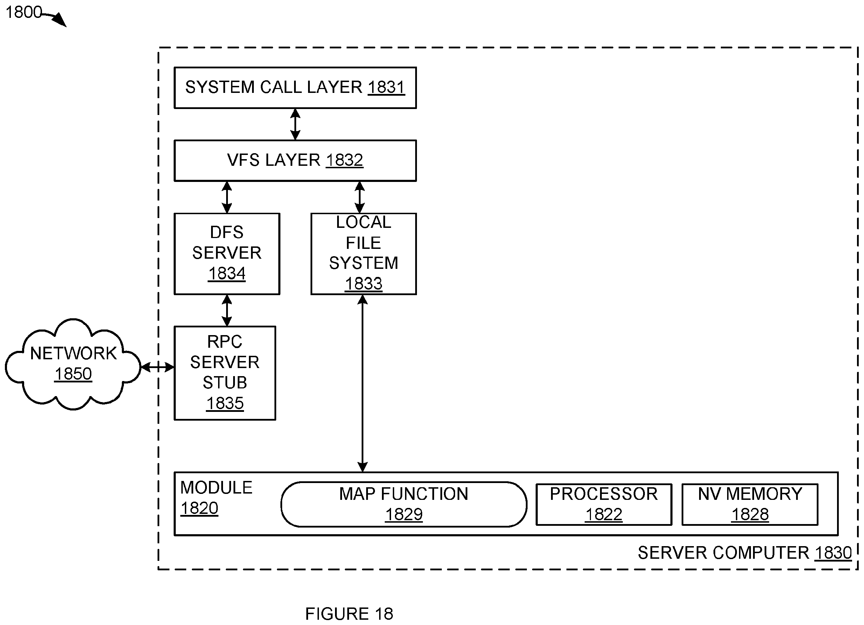

Figure 18 is an illustration of a system for distributed file processing. In Figure 18, distributed file processing system 1800 is illustrated including server computer 1830 and network 1850. Not shown in Figure 18, are client nodes, master nodes, or other map processor computers that would operatively couple to server computer 1830 via network 1850.

Server computer 1830 includes system call layer 1831, virtual file system layer 1832, local file system 1833, distributed file system server 1834, remote procedure call server stub 1835, and module 1820. Module 1820 includes map function 1829, processor 1822, and nonvolatile memory 1828. In server computer 1830, all or part of a distributed file system that is optimized for mapping functionality (e.g., 'MapReduce'-- for processing large data sets with a parallel, distributed algorithm on a cluster) resides on, and is executed on, module 1820. It should also be understood that module 1820 may be, include, correspond to, or be an embodiment of, one or more of modules 720, 920, or 1120, or include one or more elements of those modules (e.g., IC 721, IC 921, IC 1121, subsystem 800, subsystem 1000, and/or subsystem 1200), described herein.

System call layer 1831 of server computer 1830 is operatively coupled to VFS layer 1832. RPC server stub 1835 of server computer 1830 is operatively coupled to DFS server 1834. DFS server 1834 is operatively coupled to VFS layer 1832. VFS layer 1832 is operatively coupled to local file system 1833. Local file system 1833 is operatively coupled to module 1820 and therefore also operatively coupled to map function 1829. Map function 1829 may execute on processor 1822 using data stored by nonvolatile memory 1828. Accordingly, it should be understood that the map functions performed by map function 1829 and/or the distributed file system data stored by nonvolatile memory 1828 of module 1820 can be operatively coupled to the elements of client computers or a master node via local file system 1833, VFS layer 1832, DFS server 1834, RPC server stub 1835, and network 1850.

In an embodiment, local file system 1833 communicates with map function(s) 1829 of module 1820 by reading from, and writing to, an address aperture associated with module 1820, and/or map function 1829, in particular. This address aperture may be further divided into address ranges (a.k.a. ports) that are configured for communication of commands, status, and data. The ports of the address aperture may be configured and sized as blocks of addresses (e.g., column addresses).

Procedure calls and procedure data for map function 1829 received by module 1820 via a DRAM memory channel may be executed on the module 1820 (e.g., by processor 1822 using data stored by nonvolatile memory 1828). These procedure calls and the procedure data may be communicated to a module 1820 via memory write transactions addressed to a memory space (e.g., aperture) of the module 1820. These procedure calls may include RPC requests. Procedure calls and procedure data executed by module 1820 may also implement one or more virtual file system procedure calls. These procedure calls may include map calls that specify an application-specific map operation to be performed by module 1829 on a respective input data block to be stored using nonvolatile memory 1828. The map operation may also produce intermediate data values to be stored using nonvolatile memory 1828 or other memory on module 1820.

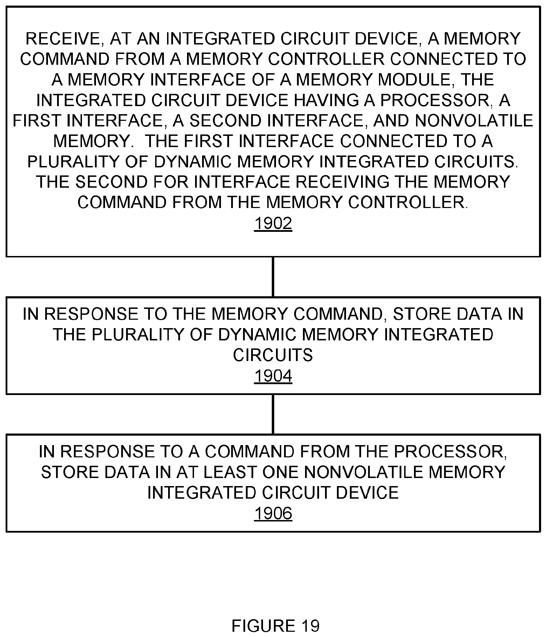

Figure 19 is a flowchart illustrating a method of operating a memory module. The steps illustrated in Figure 19 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At an integrated circuit device, a memory command from a memory controller connected to a memory interface of a memory module is received; the integrated circuit device has a processor, a first interface, a second interface, and a nonvolatile memory. The first interface is connected to a plurality of dynamic memory integrated circuits. The second interface received the memory command from the memory controller (1902). For example, integrated circuit device 921 may receive from memory controller 914 (which is coupled to a memory interface of module 920) a memory command. Integrated circuit device 921 may be, for example, system 1000. System 1000 has CA0 interface 1086 and CA1 interface 1087 that may be connected to CPU memory 923. System 1000 has NV memory 1028 (which can correspond to NV memory 928). System 1000 has CA input interface 1096 which can receive the memory command from memory controller 914.

In response to the memory command, data is stored in the plurality of dynamic memory integrated circuits (1904). For example, in response to a command received via CA input interface 1096 from memory controller 914, system 1000 may store data in dynamic memory integrated circuits connected to CA0 interface 1086 or CA1 interface 1087 (e.g., CPU memory 923).

In response to a command from the processor, data is stored in at least one nonvolatile memory integrated circuit device (1906). For example, system 1000 may store, in response to processor 1012 (or processor 922) and in NV memory 1028, data stored in CPU memory 923, local memory 1024, and/or dynamic memory connected to CA0 interface 1086 and CA1 interface 1087.

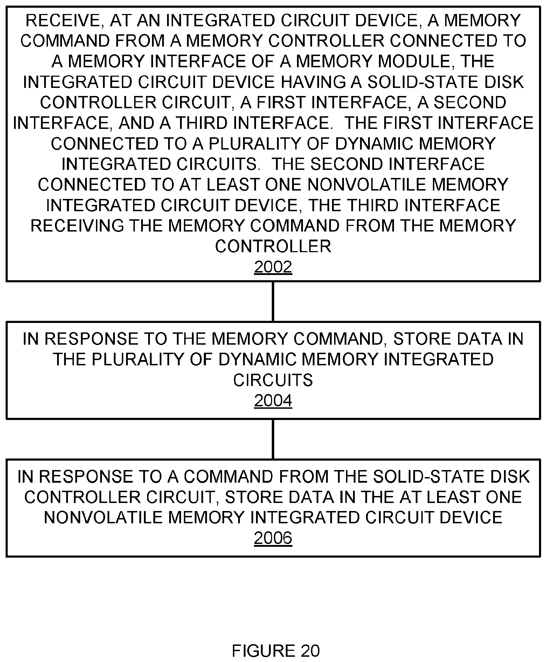

Figure 20 is a flowchart illustrating a method of operating a memory module. The steps illustrated in Figure 20 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At an integrated circuit device, a memory command from a memory controller connected to a memory interface of a memory module is received; the integrated circuit device has a solid-state disk controller circuit, a first interface, a second interface, and a third interface. The first interface is connected to a plurality of dynamic memory integrated circuits. The second interface is connected to at least one nonvolatile memory integrated circuit device. The third interface received the memory command from the memory controller (2002). For example, integrated circuit device 721 may receive from memory controller 714 (which is coupled to a memory interface of module 720) a memory command. Integrated circuit device 721 may be, for example, system 800. System 800 has CA0 interface 886 and CA1 interface 887 that may be connected to CPU memory 723. System 800 has NV controller 827 (which may be a solid-state disk controller circuit and can correspond to NV controller 725) to interface to NV memory 828 (which can correspond to NV memory 728). System 800 has CA input interface 896 which can receive the memory command from memory controller 714.

In response to the memory command, data is stored in the plurality of dynamic memory integrated circuits (2004). For example, in response to a command received via CA input interface 896 from memory controller 714, system 800 may store data in dynamic memory integrated circuits connected to CA0 interface 886 or CA1 interface 887 (e.g., CPU memory 723).

In response to a command from the solid-state disk controller circuit, data is stored in at least one nonvolatile memory integrated circuit device (2006). For example, system 800 may store, in NV memory 828 and in response to a solid-state disk controller circuit that is, or is included in, NV controller 827, data stored in CPU memory 723, local memory 824, and/or dynamic memory connected to CA0 interface 886 and CA1 interface 887.

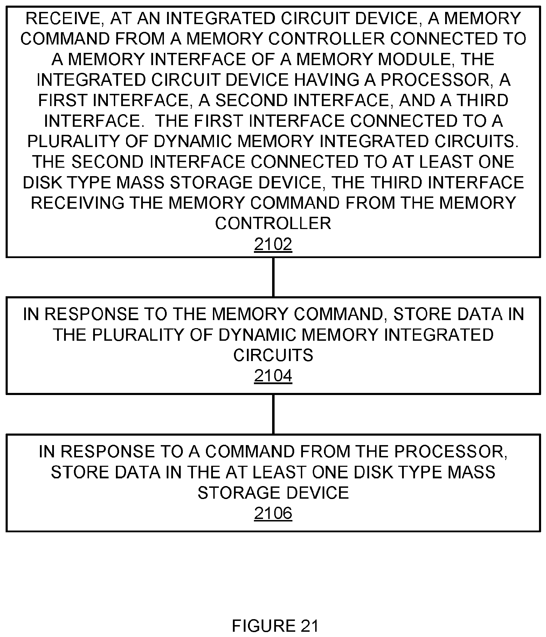

Figure 21 is a flowchart illustrating a method of operating a memory module. The steps illustrated in Figure 21 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At an integrated circuit device, a memory command from a memory controller connected to a memory interface of a memory module is received; the integrated circuit device has a processor, a first interface, a second interface, and a third interface. The first interface is connected to a plurality of dynamic memory integrated circuits. The second interface is connected to at least one disk type mass storage device. The third interface received the memory command from the memory controller (2102). For example, integrated circuit device 1121 may receive from memory controller 1114 (which is coupled to a memory interface of module 1120) a memory command. Integrated circuit device 1121 may be, for example, system 1200. System 1200 has CA0 interface 1286 and CA1 interface 1287 that may be connected to CPU memory 1123. System 1200 has disk interface 1227 (which can correspond to disk interface 1125) to interface to disk type storage 1228 (which can correspond to disk type storage 1228). System 1200 has CA input interface 1296 which can receive the memory command from memory controller 1114.

In response to the memory command, data is stored in the plurality of dynamic memory integrated circuits (2104). For example, in response to a command received via CA input interface 1296 from memory controller 1114, system 1200 may store data in dynamic memory integrated circuits connected to CA0 interface 1286 or CA1 interface 1287 (e.g., CPU memory 1123).

In response to a command from the processor, data is stored in at least one disk type mass storage device (2106). For example, system 1200 may store, in response to processor 1212 (or processor 1122) and in disk type storage 1228, data stored in CPU memory 1123, local memory 1224, and/or dynamic memory connected to CA0 interface 1286 and CA1 interface 1287.

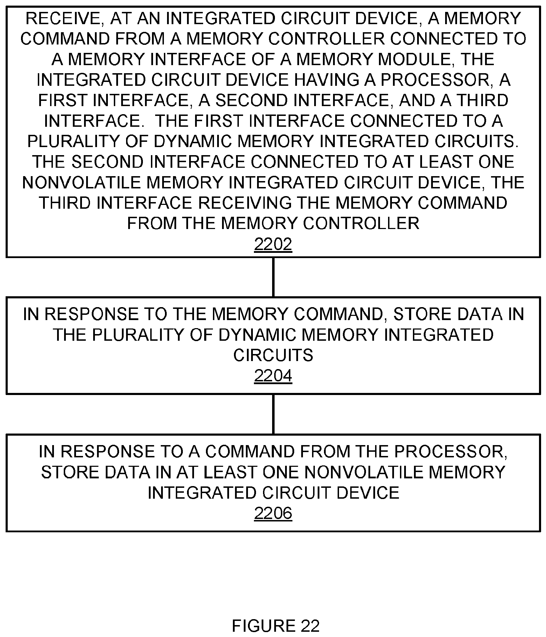

Figure 22 is a flowchart illustrating a method of operating a memory module. The steps illustrated in Figure 22 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At an integrated circuit device, a memory command from a memory controller connected to a memory interface of a memory module is received; the integrated circuit device has a processor, a first interface, a second interface, and a third interface. The first interface is connected to a plurality of dynamic memory integrated circuits. The second interface is connected to at least one nonvolatile memory integrated circuit device. The third interface received the memory command from the memory controller (2202). For example, integrated circuit device 721 may receive from memory controller 714 (which is coupled to a memory interface of module 720) a memory command. Integrated circuit device 721 may be, for example, system 800. System 800 has CA0 interface 886 and CA1 interface 887 that may be connected to CPU memory 723. System 800 has NV controller 827 (which can correspond to NV controller 725) to interface to NV memory 828 (which can correspond to NV memory 728). System 800 has CA input interface 896 which can receive the memory command from memory controller 714.

In response to the memory command, data is stored in the plurality of dynamic memory integrated circuits (2204). For example, in response to a command received via CA input interface 896 from memory controller 714, system 800 may store data in dynamic memory integrated circuits connected to CA0 interface 886 or CA1 interface 887 (e.g., CPU memory 723).

In response to a command from the processor, data is stored in at least one nonvolatile memory integrated circuit device (2206). For example, system 800 may store, in response to processor 812 (or processor 722) and in NV memory 828, data stored in CPU memory 723, local memory 824, and/or dynamic memory connected to CA0 interface 886 and CA1 interface 887.

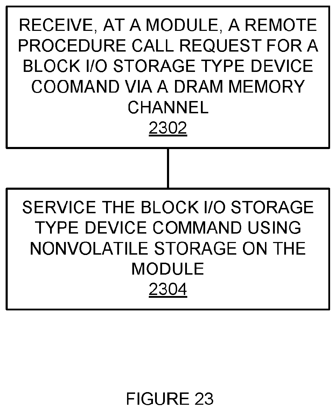

Figure 23 is a flowchart illustrating a method of operating a memory module. The steps illustrated in Figure 23 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At a module, a remote procedure call request for a block I/O storage type device command is received via a DRAM memory channel (2302). For example, module 720 may receive a remote procedure call request for a block I/O storage type device (e.g., block read of an SSD) via the DRAM memory channel that coupled module 720 and memory controller 714.

The block I/O storage type device command is serviced using nonvolatile storage on the module (2304). For example, a remote procedure call response may be provided using data stored on nonvolatile memory 728. The remote procedure call response may be communicated via the DRAM memory channel that couples module 720 and memory controller 714.

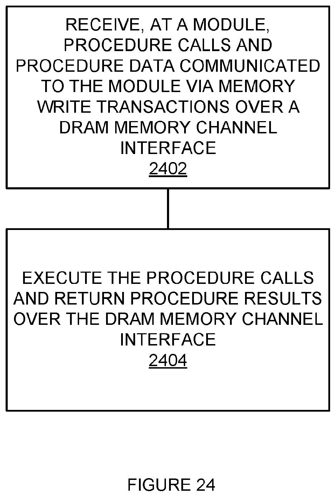

Figure 24 is a flowchart illustrating a method of operating a memory module The steps illustrated in Figure 24 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At a module, procedure calls and procedure data communicated to the module via memory write transactions over a DRAM memory channel interface are received (2402). For example, procedure calls and procedure data communicated to module 720 via memory write transactions over the DRAM memory channel interface that links module 720 and memory controller 714 may be received by module 720.

The procedure calls and are executed and the return procedure results are returned over the DRAM memory channel interface (2404). For example, processor 722 may execute the procedure calls and generate procedure results that are stored in nonvolatile memory 728. The procedure results that are stored in nonvolatile memory 728 may be returned in response to read commands that communicate the result data via the DRAM memory channel interface that links module 720 and memory controller 714.

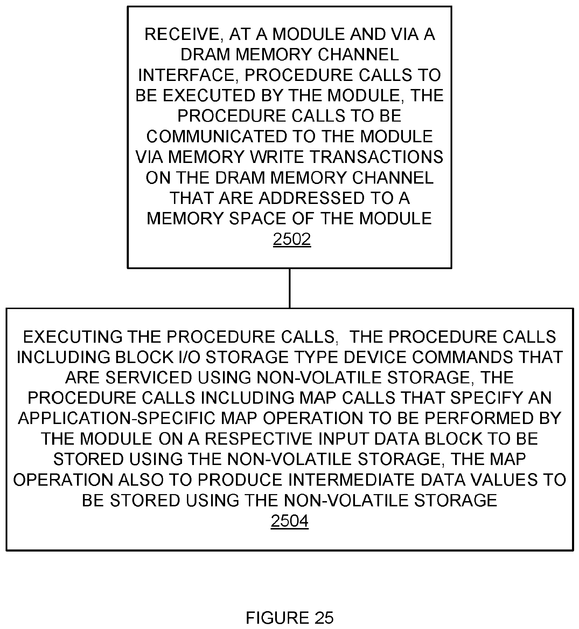

Figure 25 is a flowchart illustrating a method of operating a memory module The steps illustrated in Figure 25 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At a module, and via a DRAM memory channel interface, procedure calls to be executed by the module are received via memory write transactions on the DRAM memory channel and are addressed to a memory space of the module (2502). For example, module 720 may receive, from memory controller 714, memory write transactions addressed to the memory space of module 720. These memory write transaction may communicate procedure calls to be executed by the module (e.g., remote procedure calls, or function calls).

The procedure calls, which include block I/O storage type device commands that are serviced using non-volatile storage, and include map calls that specify an application-specific map operation to be performed by the module on a respective input data block to be stored using the non-volatile storage, and the map operation to also produce intermediate data values to be stored using the non-volatile storage, are executed (2504). For example, module 720 may be controlled to perform 'MapReduce' map type functions using data stored using nonvolatile memory 728.

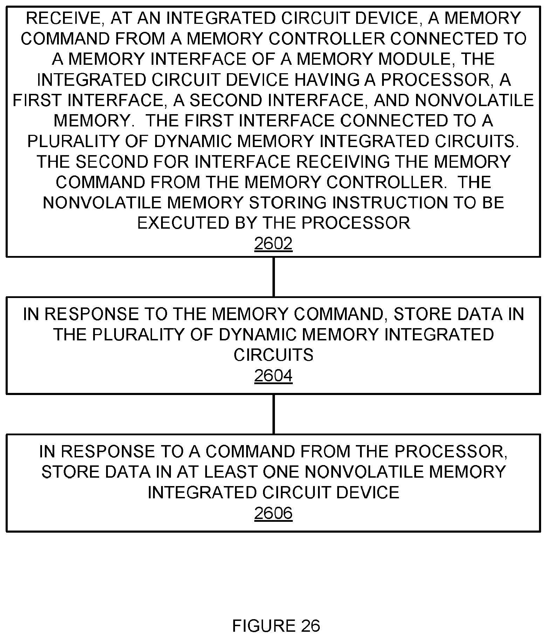

Figure 26 is a flowchart illustrating a method of operating a memory module. The steps illustrated in Figure 26 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. At an integrated circuit device, a memory command from a memory controller connected to a memory interface of a memory module is received; the integrated circuit device has a processor, a first interface, a second interface, and a nonvolatile memory. The first interface is connected to a plurality of dynamic memory integrated circuits. The second interface received the memory command from the memory controller (2602). For example, integrated circuit device 921 may receive from memory controller 914 (which is coupled to a memory interface of module 920) a memory command. Integrated circuit device 921 may be, for example, system 1000. System 1000 has CA₀ interface 1086 and CA₁ interface 1087 that may be connected to CPU memory 923. System 1000 has NV memory 1028 (which can correspond to NV memory 928). System 1000 has CA input interface 1096 which can receive the memory command from memory controller 914.

In response to the memory command, data is stored in the plurality of dynamic memory integrated circuits (2604). For example, in response to a command received via CA input interface 1096 from memory controller 914, system 1000 may store data in dynamic memory integrated circuits connected to CA₀ interface 1086 or CA₁ interface 1087 (*e.g.,* CPU memory 923).

In response to a command from the processor, data is stored in at least one nonvolatile memory integrated circuit device (2606). For example, system 1000 may store, in response to processor 1012 (or processor 922) and in NV memory 1028, data stored in CPU memory 923, local memory 1024, and/or dynamic memory connected to CA0 interface 1086 and CA1 interface 1087.

The systems and devices described above may be implemented in computer systems, integrated circuits, or stored by computer systems. The systems described above may also be stored on a non-transitory computer readable medium. Devices, circuits, and systems described herein may be implemented using computer-aided design tools available in the art, and embodied by computer-readable files containing software descriptions of such circuits The steps illustrated in Figure 19 may be performed by one or more elements of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components. These software descriptions may be: behavioral, register transfer, logic component, transistor, and layout geometry-level descriptions. Moreover, the software descriptions may be stored on non-transitory storage media or communicated by carrier waves.

Data formats in which such descriptions may be implemented include, but are not limited to: formats supporting behavioral languages like C, formats supporting register transfer level (RTL) languages like Verilog and VHDL, formats supporting geometry description languages (such as GDSII, GDSIII, GDSIV, CIF, and MEBES), and other suitable formats and languages. Moreover, data transfers of such files on machine-readable media may be done electronically over the diverse media on the Internet or, for example, via email. Note that physical files may be implemented on machine-readable media such as: 4 mm magnetic tape, 8 mm magnetic tape, 3-1/2 inch floppy media, CDs, DVDs, Blu-Ray, and so on.

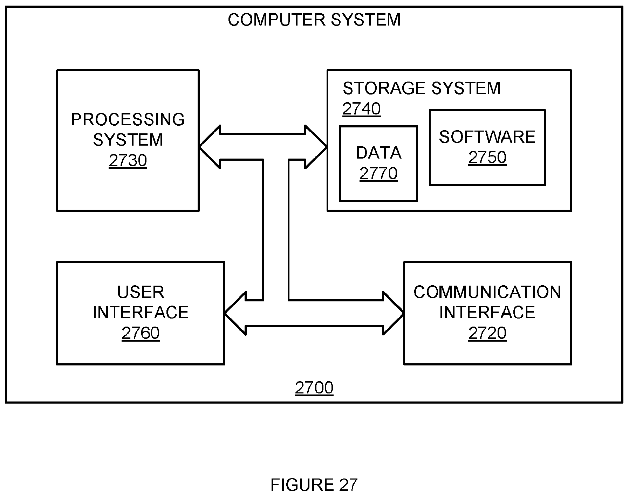

Figure 27 illustrates a block diagram of a computer system. Computer system 2700 includes communication interface 2720, processing system 2730, storage system 2740, and user interface 2760. Processing system 2730 is operatively coupled to storage system 2740. Storage system 2740 stores software 2750 and data 2770. Computer system 2700 may include one or more of system 100, system 400, module 500, system 700, subsystem 800, subsystem 801, system 900, subsystem 1000, subsystem 1001, system 1100, subsystem 1200, subsystem 1201, system 1300, system 1400, system 1500, system 1600, system 1700, system 1800, and/or their components, or components that implement the methods, functions, processing, communication, circuits, and/or systems described herein. Processing system 2730 is operatively coupled to communication interface 2720 and user interface 2760. Computer system 2700 may comprise a programmed general-purpose computer. Computer system 2700 may include a microprocessor. Computer system 2700 may comprise programmable or special purpose circuitry. Computer system 2700 may be distributed among multiple devices, processors, storage, and/or interfaces that together comprise elements 2720-2770.

Communication interface 2720 may comprise a network interface, modem, port, bus, link, transceiver, or other communication device. Communication interface 2720 may be distributed among multiple communication devices. Processing system 2730 may comprise a microprocessor, microcontroller, logic circuit, or other processing device. Processing system 2730 may be distributed among multiple processing devices. User interface 2760 may comprise a keyboard, mouse, voice recognition interface, microphone and speakers, graphical display, touch screen, or other type of user interface device. User interface 2760 may be distributed among multiple interface devices. Storage system 2740 may comprise a disk, tape, integrated circuit, RAM, ROM, EEPROM, flash memory, network storage, server, or other memory function. Storage system 2740 may include computer readable medium. Storage system 2740 may be distributed among multiple memory devices.

Processing system 2730 retrieves and executes software 2750 from storage system 2740. Processing system 2730 may retrieve and store data 2770. Processing system 2730 may also retrieve and store data via communication interface 2720. Processing system 2730 may create or modify software 2750 or data 2770 to achieve a tangible result. Processing system 2730 may control communication interface 2720 or user interface 2760 to achieve a tangible result. Processing system 2730 may retrieve and execute remotely stored software via communication interface 2720.

Software 2750 and remotely stored software may comprise an operating system, utilities, drivers, networking software, and other software typically executed by a computer system. Software 2750 may comprise an application program, applet, firmware, or other form of machine-readable processing instructions typically executed by a computer system. When executed by processing system 2730, software 2750 or remotely stored software may direct computer system 2700 to operate.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A dual-inline memory module (500, 720, 920, 1120, 1320, 1420, 1520, 1620, 1720, 1820) comprising:
a module interface (152) configured to send module data from the dual-inline memory module (500, 720, 920, 1120, 1320, 1420, 1520, 1620, 1720, 1820) using parallel data channels (115);
a non-volatile flash memory bank (728, 928, 1128, 1228, 1328, 1428, 1528, 1628, 1728, 1828); and
one or more integrated circuits configured to enable the module data to be read from the non-volatile flash memory bank (728, 928, 1128, 1228, 1328, 1428, 1528, 1628, 1728, 1828) and to be written to a dynamic random access memory bank (723, 923, 1123), the one or more integrated circuits also configured to read the module data from the dynamic random access memory bank (723, 923, 1323) and send, via the parallel data channels (115), the module data read from the dynamic random access memory bank (723, 923, 1123)), and, wherein the one or more integrated circuits are configured to translate between a first addressing scheme employed by the dynamic random access memory bank (723, 923, 1123) and a second addressing scheme employed by the non-volatile flash memory bank, the module to execute at least a part of a module block device driver (1360) that receives the block I/O storage type device commands via the parallel data channels (115) from a local file system(1633), the block I/O storage type device commands received from the local file system (1633) causing the module data to be read from the non-volatile flash memory bank (728, 928, 1128, 1228, 1328, 1428, 1528, 1628, 1728,1828).

2. A dual-inline memory module (500, 720, 920, 1120, 1320, 1420, 1520, 1620, 1720, 1820) comprising:
a module interface (152) configured to receive module data into the dual-inline memory module (500, 720, 920, 1120, 1320, 1420, 1520, 1620, 1720, 1820) using parallel data channels (115);
a non-volatile flash memory bank; and
one or more integrated circuits configured to receive the module data using the parallel data channels (115) and to enable the module data to be written to a dynamic random access memory bank (723, 923, 1123)), read from the dynamic random access memory bank, and written to the non-volatile flash memory bank, wherein the one or more integrated circuits are configured to translate between a first addressing scheme employed by the dynamic random access memory bank (723, 923, 1123) and a second addressing scheme employed by the non-volatile flash memory bank, the module to execute at least a part of a module block device driver (1360) that receives the block I/O storage type device commands via the parallel data channels (115) from a local file system(1633), the block I/O storage type device commands received from the local file system (1633) causing the module data to be written to the non-volatile flash memory bank.

3. The dual-inline memory module (500, 720, 920, 1120, 1320, 1420, 1520, 1620, 1720, 1820) of claim 1 or 2, wherein the dynamic random access memory bank (723, 923, 1123) is located outside of the integrated circuit, in particular wherein the dynamic random access memory bank (723, 923, 1123) includes dynamic data rate memory and the non-volatile flash memory bank (728, 928, 1128, 1228, 1328, 1428, 1528, 1628, 1728, 1828) includes a solid state disk ().

4. The dual-inline memory module (500, 720, 920, 1120, 1320, 1420, 1520, 1620, 1720, 1820) of claim 1 or 3, wherein the integrated circuit is configured to enable:
the module data to be read from the non-volatile flash memory bank (728, 928, 1128, 1228, 1328, 1428, 1528, 1628, 1728, 1828) employing the second addressing scheme;
the module data read from the non-volatile flash memory bank (728, 928, 1128, 1228, 1328, 1428, 1528, 1628, 1728, 1828) employing the second addressing scheme to be written to the dynamic random access memory bank;
the module data written to the dynamic random access memory bank (723, 923, 1123) to be translated from the second addressing scheme employed by the non-volatile flash memory bank (728, 928, 1128, 1228, 1328, 1428, 1528, 1628, 1728, 1828) to the first addressing scheme employed by the dynamic random access memory bank; and
the module data translated to the first addressing scheme employed by the dynamic random access memory bank (723, 923, 1123) to be read from the dynamic random access memory bank (723, 923, 1123) employing the first addressing scheme.

5. The dual-inline memory module (500, 720, 920, 1120, 1320, 1420, 1520, 1620, 1720, 1820) of claim 2 or 3, wherein the integrated circuit is configured to enable:
the module data to be written to the dynamic random access memory bank (723, 923, 1123) employing the first addressing scheme;
the module data written to the dynamic random access memory bank (723, 923, 1123) employing the first addressing scheme to be read;
the module data read from the dynamic random access memory bank (723, 923, 1123) to be translated from the first addressing scheme employed by the dynamic random access memory bank (723, 923, 1123) to the second addressing scheme employed by the non-volatile flash memory bank; and
the module data translated to the second addressing scheme employed by the non-volatile flash memory bank (728, 928, 1128, 1228, 1328, 1428, 1528, 1628, 1728, 1828) to be written to the non-volatile flash memory bank (728, 928, 1128, 1228, 1328, 1428, 1528, 1628, 1728, 1828) employing the second addressing scheme.

6. The dual-inline memory module (500, 720, 920, 1120, 1320, 1420, 1520, 1620, 1720, 1820) of one of claims 1 to 5, wherein the integrated circuit further comprises a buffer, in particular, wherein the buffer further comprises:
a write buffer including a write data queue circuit; and
a read buffer including a read data queue circuit, in particular, wherein the integrated circuit is configured to enable:
the module data to be written from the buffer to the dynamic random access memory bank.
the module data to be read from the dynamic random access memory bank (723, 923, 1123) into the buffer; and
the module data to be read from the non-volatile flash memory bank (728, 928, 1128, 1228, 1328, 1428, 1528, 1628, 1728, 1828) into the buffer, or the module data to be written from the buffer to the non-volatile flash memory bank, respectively.

7. The dual-inline memory module (500, 720, 920, 1120, 1320, 1420, 1520, 1620, 1720, 1820) of one of claims 1 to 6, wherein the integrated circuit further comprises:
a peripheral processor configured to execute commands; and
a controller configured to translate between the first addressing scheme employed by the dynamic random access memory bank (723, 923, 1123) and the second addressing scheme employed by the non-volatile flash memory bank (728, 928, 1128, 1228, 1328, 1428, 1528, 1628, 1728, 1828) according to instructions from the peripheral processor.

8. The dual-inline memory module (500, 720, 920, 1120, 1320, 1420, 1520, 1620, 1720, 1820) of one of claims 1 to 7, further comprising a bridge circuit configured to enable the module data to be read from or written to the non-volatile flash memory bank, in particular, wherein the bridge circuit is configured to perform serialization or deserialization operations, in particular, wherein the bridge circuit is located within the integrated circuit.

9. A system comprising: a central processing unit (105, 712, 812), executing a local file system (1633), with a memory controller (144) configured to receive delivery of module data from a module memory (110, 410, 500) using parallel data channels (115); and a dual-inline memory module (500, 720, 920, 1120, 1320, 1420, 1520, 1620, 1720, 1820) according to claim 1, said dual-inline memory module configured to send the module data to the central processing unit (105, 712, 812) via the memory controller (144).

10. The system of claim 9, wherein the one or more integrated circuits is configured to enable: the module data to be written to the dynamic random access memory bank (723, 923, 1123) employing the first addressing scheme; the module data written to the dynamic random access memory bank (723, 923, 1123) employing the first addressing scheme to be read; the module data read from non-volatile flash memory bank (728, 928, 1128, 1228, 1328, 1428, 1528, 1628, 1728, 1828) to be translated from the second addressing scheme employed by non-volatile flash memory bank (728, 928, 1128, 1228, 1328, 1428, 1528, 1628, 1728, 1828) to the first addressing scheme employed by the dynamic random access memory bank (723, 923, 1123); and the module data translated to the second addressing scheme employed by the non-volatile flash memory bank (728, 928, 1128, 1228, 1328, 1428, 1528, 1628, 1728, 1828) to be written to the dynamic random access memory bank (723, 923, 1123) employing the first addressing scheme.

11. The system of claim 11, wherein the one or more integrated circuits further comprises a buffer, in particular further comprising a bridge circuit configured to enable the module data to be read from or written to the non-volatile flash memory bank (728, 928, 1128, 1228, 1328, 1428, 1528, 1628, 1728, 1828), wherein the bridge circuit is configured to perform serialization or deserialization operations.

12. A system comprising:
a central processing unit (105, 712, 812) with a memory controller (144) configured to direct delivery of module data from the central processing unit (105, 712, 812) to module memory (110, 410, 500) using parallel data channels (115); and
a dual-inline memory module (500, 720, 920, 1120, 1320, 1420, 1520, 1620, 1720, 1820) according to claim 2, said dual in-line memory module configured to receive the module data from the central processing unit (105, 712, 81).

13. The system of claim 12, wherein the integrated circuit is configured to enable:
the module data to be written to the dynamic random access memory bank (723, 923, 1123) employing the first addressing scheme;
the module data written to the dynamic random access memory bank (723, 923, 1123) employing the first addressing scheme to be read;
the module data read from the dynamic random access memory bank (723, 923, 1123) to be translated from the first addressing scheme employed by the dynamic random access memory bank (723, 923, 1123) to the second addressing scheme employed by the non-volatile flash memory bank; and
the module data translated to the second addressing scheme employed by the non-volatile flash memory bank (728, 928, 1128, 1228, 1328, 1428, 1528, 1628, 1728, 1828) to be written to the non-volatile flash memory bank (728, 928, 1128, 1228, 1328, 1428, 1528, 1628, 1728, 1828) employing the second addressing scheme.

14. The system of claim 12 or 13, wherein the integrated circuit further comprises a buffer.

15. The system of one of claims 12 to 14, further comprising a bridge circuit configured to enable the module data to be read from or written to the non-volatile flash memory bank, in particular, wherein the bridge circuit is configured to perform serialization or deserialization operations.

## Patentansprüche

1. Dual Inline Memory Module (500, 720, 920, 1120, 1320, 1420, 1520, 1620, 1720, 1820), Folgendes umfassend:
eine Modulschnittstelle (152), konfiguriert zum Senden von Moduldaten vom Dual Inline Memory Module (500, 720, 920, 1120, 1320, 1420, 1520, 1620, 1720, 1820) unter Verwendung paralleler Datenkanäle (115);
eine nichtflüchtige Flash-Speicherbank (728, 928, 1128, 1228, 1328, 1428, 1528, 1628, 1728, 1828); und
eine oder mehrere integrierte Schaltungen, die konfiguriert sind, um zu ermöglichen, dass die Moduldaten aus der nichtflüchtigen Flash-Speicherbank (728, 928, 1128, 1228, 1328, 1428, 1528, 1628, 1728, 1828) gelesen und in eine dynamische Direktzugriffsspeicherbank (723, 923, 1123) geschrieben werden, wobei die eine oder mehreren integrierten Schaltungen ebenfalls konfiguriert sind, um die Moduldaten aus der dynamischen Direktzugriffsspeicherbank (723, 923, 1323) zu lesen und die Moduldaten, die aus der dynamischen Direktzugriffsspeicherbank (723, 923, 1123) gelesen werden, über die parallelen Datenkanäle (115) zu senden, und wobei die eine oder mehreren integrierten Schaltungen konfiguriert sind, um zwischen einem ersten Adressierungsschema, das von der dynamischen Direktzugriffsspeicherbank (723, 923, 1123) verwendet wird, und einem zweiten Adressierungsschema, das von der nichtflüchtigen Flash-Speicherbank verwendet wird, zu übersetzen, wobei das Modul mindestens einen Teil eines Modulblock-Gerätetreibers (1360) ausführt, der die Befehle der Block-I/O-Speichertypenvorrichtung von einem lokalen Dateisystem (1633) über die parallelen Datenkanäle (115) empfängt, wobei die Befehle der Block-I/O-Speichertypenvorrichtung, empfangen von dem lokalen Dateisystem (1633), verursachen, dass die Moduldaten von der nichtflüchtigen Flash-Speicherbank (728, 928, 1128, 1228, 1328, 1428, 1528, 1628, 1728, 1828) gelesen werden.

2. Dual Inline Memory Module (500, 720, 920, 1120, 1320, 1420, 1520, 1620, 1720, 1820), Folgendes umfassend:
eine Modulschnittstelle (152), konfiguriert zum Empfangen von Moduldaten in dem Dual Inline Memory Module (500, 720, 920, 1120, 1320, 1420, 1520, 1620, 1720, 1820) unter Verwendung paralleler Datenkanäle (115);
eine nichtflüchtige Flash-Speicherbank; und
eine oder mehrere integrierte Schaltungen, die konfiguriert sind, um die Moduldaten unter Verwendung der parallelen Datenkanäle (115) zu empfangen und um zu ermöglichen, dass die Moduldaten in eine dynamische Direktzugriffsspeicherbank (723, 923, 1123) geschrieben werden, aus der dynamische Direktzugriffsspeicherbank gelesen werden und in die nichtflüchtige Flash-Speicherbank geschrieben werden, wobei die eine oder mehreren integrierten Schaltungen konfiguriert sind, um zwischen einem ersten Adressierungsschema, das von der dynamischen Direktzugriffsspeicherbank (723, 923, 1123) verwendet wird, und einem zweiten Adressierungsschema, das von der nichtflüchtigen Flash-Speicherbank verwendet wird, zu übersetzen, wobei das Modul mindestens einen Teil eines Modulblock-Gerätetreibers (1360) ausführt, der die Befehle der Block-I/O-Speichertypvorrichtung von einem lokalen Dateisystem (1633) über die parallelen Datenkanäle (115) empfängt, wobei die von dem lokalen Dateisystem (1633) empfangenen Befehle der Block-I/O-Speichertypvorrichtung bewirken, dass die Moduldaten in die nichtflüchtige Flash-Speicherbank geschrieben werden.

3. Dual Inline Memory Module (500, 720, 920, 1120, 1320, 1420, 1520, 1620, 1720, 1820) nach Anspruch 1 oder 2, wobei die dynamische Direktzugriffsspeicherbank (723, 923, 1123) außerhalb des integrierten Schaltkreises angeordnet ist, insbesondere wobei die dynamische Direktzugriffsspeicherbank (723, 923, 1123) einen dynamischen Datenratenspeicher einschließt, und die nichtflüchtige Flash-Speicherbank (728, 928, 1128, 1228, 1328, 1428, 1528, 1628, 1728, 1828) eine Festkörperplatte () einschließt.

4. Dual Inline Memory Module (500, 720, 920, 1120, 1320, 1420, 1520, 1620, 1720, 1820) nach Anspruch 1 oder 3, wobei die integrierte Schaltung konfiguriert ist, um Folgendes zu ermöglichen:
das Lesen der Moduldaten aus der nichtflüchtigen Flash-Speicherbank (728, 928, 1128, 1228, 1328, 1428, 1528, 1628, 1728, 1828), die das zweite Adressierungsschema verwendet;
das Schreiben der Moduldaten, gelesen aus der nichtflüchtigen Flash-Speicherbank (728, 928, 1128, 1228, 1328, 1428, 1528, 1628, 1728, 1828), die das zweite Adressierungsschema verwendet, in die dynamische Direktzugriffsspeicherbank;
das Übersetzen der Moduldaten, geschrieben in der dynamischen Direktzugriffsspeicherbank (723, 923, 1123), von dem zweiten Adressierungsschema, verwendet von der nichtflüchtigen Flash-Speicherbank (728, 928, 1128, 1228, 1328, 1428, 1528, 1628, 1728, 1828), in das erste Adressierungsschema, verwendet von der dynamische Direktzugriffsspeicherbank; und
das Lesen der Moduldaten, übersetzt in das erste Adressierungsschema, verwendet von der dynamische Direktzugriffsspeicherbank (723, 923, 1123), aus der dynamischen Direktzugriffsspeicherbank (723, 923, 1123), die das erste Adressierungsschema verwendet.

5. Dual Inline Memory Module (500, 720, 920, 1120, 1320, 1420, 1520, 1620, 1720, 1820) nach Anspruch 2 oder 3, wobei die integrierte Schaltung konfiguriert ist, um Folgendes zu ermöglichen:
das Schreiben der Moduldaten in die dynamische Direktzugriffsspeicherbank (723, 923, 1123), die das erste Adressierungsschema verwendet;
das Lesen der Moduldaten, geschrieben in die dynamische Direktzugriffsspeicherbank (723, 923, 1123), die das erste Adressierungsschema verwendet;
das Übersetzen der Moduldaten, gelesen aus der dynamischen Direktzugriffsspeicherbank (723, 923, 1123), von dem ersten Adressierungsschema, verwendet von der dynamischen Direktzugriffsspeicherbank (723, 923, 1123), in das zweite Adressierungsschema, verwendet von der nichtflüchtige Flash-Speicherbank; und
das Schreiben der Moduldaten, übersetzt in das zweite Adressierungsschema, verwendet von der nichtflüchtigen Flash-Speicherbank (728, 928, 1128, 1228, 1328, 1428, 1528, 1628, 1728, 1828), in die nichtflüchtige Flash-Speicherbank (728, 928, 1128, 1228, 1328, 1428, 1528, 1628, 1728, 1828), die das zweite Adressierungsschema verwendet.

6. Dual Inline Memory Module (500, 720, 920, 1120, 1320, 1420, 1520, 1620, 1720, 1820) nach einem der Ansprüche 1 bis 5, wobei die integrierte Schaltung ferner einen Puffer umfasst, insbesondere wobei der Puffer ferner Folgendes umfasst:
einen Schreibpuffer mit einer Schreibdaten-Warteschlangenschaltung; und
einen Lesepuffer mit einer Lesedaten-Warteschlangenschaltung, insbesondere wobei die integrierte Schaltung konfiguriert ist, um Folgendes zu ermöglichen:
das Schreiben der Moduldaten aus dem Puffer in die dynamische Direktzugriffsspeicherbank,
das Lesen der Moduldaten aus der dynamischen Direktzugriffsspeicherbank (723, 923, 1123) in den Puffer; und
jeweils das Lesen der Moduldaten von der nichtflüchtigen Flash-Speicherbank (728, 928, 1128, 1228, 1328, 1428, 1528, 1628, 1728, 1828) in den Puffer oder das Schreiben der Moduldaten aus dem Puffer in die nichtflüchtige Flash-Speicherbank.

7. Dual Inline Memory Module (500, 720, 920, 1120, 1320, 1420, 1520, 1620, 1720, 1820) nach einem der Ansprüche 1 bis 6, wobei die integrierte Schaltung ferner Folgendes umfasst:
ein Peripherieprozessor, konfiguriert zum Ausführen von Befehlen; und
eine Steuerung, konfiguriert zum Übersetzen zwischen dem ersten Adressierungsschema, verwendet von der dynamischen Direktzugriffsspeicherbank (723, 923, 1123), und dem zweiten Adressierungsschema, verwendet von der nichtflüchtigen Flash-Speicherbank (728, 928, 1128, 1228, 1328, 1428, 1528, 1628, 1728, 1828) gemäß Befehlen von dem Peripherieprozessor.

8. Dual Inline Memory Module (500, 720, 920, 1120, 1320, 1420, 1520, 1620, 1720, 1820) nach einem der Ansprüche 1 bis 7, ferner umfassend eine Brückenschaltung, die konfiguriert ist, um zu ermöglichen, dass die Moduldaten von der nichtflüchtigen Flash-Speicherbank gelesen oder in diese geschrieben werden, insbesondere wobei die Brückenschaltung zum Durchführen von Serialisierungs- oder Deserialisierungsoperationen konfiguriert ist, insbesondere wobei die Brückenschaltung in der integrierten Schaltung angeordnet ist.

9. System, Folgendes umfassend: eine Zentraleinheit (105, 712, 812), die ein lokales Dateisystem (1633) ausführt, mit einer Speichersteuerung (144), die konfiguriert ist, um von einem Modulspeicher (110, 410, 500) unter Verwendung paralleler Datenkanäle (115) bereitgestellte Moduldaten zu empfangen; und ein Dual Inline Memory Module (500, 720, 920, 1120, 1320, 1420, 1520, 1620, 1720, 1820) nach Anspruch 1, wobei das Dual Inline Memory Module konfiguriert ist, um die Moduldaten über die Speichersteuerung (144) an die Zentraleinheit (105, 712, 812) zu senden.

10. System nach Anspruch 9, wobei die eine oder mehreren integrierten Schaltungen konfiguriert sind, um Folgendes zu ermöglichen: das Schreiben der Moduldaten in die dynamische Direktzugriffsspeicherbank (723, 923, 1123), die das erste Adressierungsschema verwendet; das Lesen der Moduldaten, geschrieben in die dynamische Direktzugriffsspeicherbank (723, 923, 1123), die das erste Adressierungsschema verwendet; das Übersetzen der Moduldaten, gelesen aus der nichtflüchtigen Flash-Speicherbank (728, 928, 1128, 1228, 1328, 1428, 1528, 1628, 1728, 1828), von dem zweiten Adressierungsschema, verwendet von der nichtflüchtigen Flash-Speicherbank (728, 928, 1128, 1228, 1328, 1428, 1528, 1628, 1728, 1828), in das erste Adressierungsschema, verwendet von der dynamischen Direktzugriffsspeicherbank (723, 923, 1123); und das Schreiben der Moduldaten, übersetzt in das zweite Adressierungsschema, das von der nichtflüchtigen Flash-Speicherbank (728, 928, 1128, 1228, 1328, 1428, 1528, 1628, 1728, 1828) verwendet wird, in die dynamische Direktzugriffsspeicherbank (723, 923, 1123), die das erste Adressierungsschema verwendet.

11. System nach Anspruch 11, wobei die eine oder mehreren integrierten Schaltungen ferner einen Puffer umfassen, insbesondere ferner eine Brückenschaltung umfassen, die konfiguriert ist, um zu ermöglichen, dass die Moduldaten aus der nichtflüchtigen Flash-Speicherbank (728, 928, 1128, 1228, 1328, 1428, 1528, 1628, 1728, 1828) gelesen werden oder in diese geschrieben werden, wobei die Brückenschaltung konfiguriert ist, um Serialisierungs- oder Deserialisierungsoperationen durchzuführen.

12. System, Folgendes umfassend:
eine Zentraleinheit (105, 712, 812) mit einer Speichersteuerung (144), die konfiguriert ist für die direkte Bereitstellung von Moduldaten von der Zentraleinheit (105, 712, 812) zu dem Modulspeicher (110, 410, 500) unter Verwendung paralleler Datenkanäle (115); und
ein Dual Inline Memory Module (500, 720, 920, 1120, 1320, 1420, 1520, 1620, 1720, 1820) nach Anspruch 2, wobei das Dual Inline Memory Module konfiguriert ist, um die Moduldaten von der Zentraleinheit (105, 712, 812) zu empfangen.

13. System nach Anspruch 12, wobei die integrierte Schaltung konfiguriert ist, um Folgendes zu ermöglichen:
das Schreiben der Moduldaten in die dynamische Direktzugriffsspeicherbank (723, 923, 1123), die das erste Adressierungsschema verwendet;
das Lesen der Moduldaten, geschrieben in die dynamische Direktzugriffsspeicherbank (723, 923, 1123), die das erste Adressierungsschema verwendet;
das Übersetzen der Moduldaten, gelesen aus der dynamischen Direktzugriffsspeicherbank (723, 923, 1123), von dem ersten Adressierungsschema, verwendet von der dynamischen Direktzugriffsspeicherbank (723, 923, 1123), in das zweite Adressierungsschema, verwendet von der nichtflüchtigen Flash-Speicherbank; und
das Schreiben der Moduldaten, übersetzt in das zweite Adressierungsschema, verwendet von der nichtflüchtigen Flash-Speicherbank (728, 928, 1128, 1228, 1328, 1428, 1528, 1628, 1728, 1828), in die nichtflüchtige Flash-Speicherbank (728, 928, 1128, 1228, 1328, 1428, 1528, 1628, 1728, 1828), unter Verwendung des zweiten Adressierungsschemas.

14. System nach Anspruch 12 oder 13, wobei die integrierte Schaltung ferner einen Puffer umfasst.

15. System nach einem der Ansprüche 12 bis 14, ferner umfassend eine Brückenschaltung, die konfiguriert ist, um zu ermöglichen, dass die Moduldaten aus der nichtflüchtigen Flash-Speicherbank gelesen oder in diese geschrieben werden, insbesondere wobei die Brückenschaltung konfiguriert ist, um Serialisierungs- oder Deserialisierungsoperationen auszuführen.

## Revendications

1. Module de mémoire à double rangée de contacts (500, 720, 920, 1120, 1320, 1420, 1520, 1620, 1720, 1820) comprenant :
une interface de module (152) configurée pour envoyer des données de module à partir du module de mémoire à double rangée de contacts (500, 720, 920, 1120, 1320, 1420, 1520, 1620, 1720, 1820) en utilisant des canaux de données parallèles (115) ;
une banque de mémoire flash non volatile (728, 928, 1128, 1228, 1328, 1428, 1528, 1628, 1728, 1828) ; et
un ou des circuits intégrés configurés pour permettre aux données de module d'être lues à partir de la banque de mémoire flash non volatile (728, 928, 1128, 1228, 1328, 1428, 1528, 1628, 1728, 1828) et d'être écrites dans une banque de mémoire dynamique à accès aléatoire (723, 923, 1123), le ou les circuits intégrés étant également configurés pour lire les données de module à partir de la banque de mémoire dynamique à accès aléatoire (723, 923, 1323) et envoyer, par le biais des canaux de données parallèles (115), les données de module lues à partir de la banque de mémoire dynamique à accès aléatoire (723, 923, 1123), et dans lequel le ou les circuits intégrés sont configurés pour translater entre un premier schéma d'adressage utilisé par la banque de mémoire dynamique à accès aléatoire (723, 923, 1123) et un deuxième schéma d'adressage utilisé par la banque de mémoire flash non volatile, le module étant adapté pour exécuter au moins une partie d'un pilote de dispositif de bloc de module (1360) qui reçoit les commandes de dispositif de type de stockage I/O de bloc par le biais des canaux de données parallèles (115) à partir d'un système de fichiers local (1633), les commandes de dispositif de type de stockage I/O de bloc reçues à partir du système de fichiers local (1633) amenant les données de module à être lues à partir de la banque de mémoire flash non volatile (728, 928, 1128, 1228, 1328, 1428, 1528, 1628, 1728, 1828).

2. Module de mémoire à double rangée de contacts (500, 720, 920, 1120, 1320, 1420, 1520, 1620, 1720, 1820) comprenant :
une interface de module (152) configurée pour recevoir des données de module dans le module de mémoire à double rangée de contacts (500, 720, 920, 1120, 1320, 1420, 1520, 1620, 1720, 1820) en utilisant des canaux de données parallèles (115) ;
une banque de mémoire flash non volatile ; et
un ou des circuits intégrés configurés pour recevoir les données de module en utilisant les canaux de données parallèles (115) et permettre aux données de module d'être écrites dans une banque de mémoire dynamique à accès aléatoire (723, 923, 1123), lues à partir de la banque de mémoire dynamique à accès aléatoire et écrites dans la banque de mémoire flash non volatile, dans lequel le ou les circuits intégrés sont configurés pour translater entre un premier schéma d'adressage utilisé par la banque de mémoire dynamique à accès aléatoire (723, 923, 1123) et un deuxième schéma d'adressage utilisé par la banque de mémoire flash non volatile, le module étant adapté pour exécuter au moins une partie d'un pilote de dispositif de bloc de module (1360) qui reçoit les commandes de dispositif de type de stockage I/O de bloc par le biais des canaux de données parallèles (115) à partir d'un système de fichiers local (1633), les commandes de dispositif de type de stockage I/O de bloc reçues à partir du système de fichiers local (1633) amenant les données de module à être écrites dans la banque de mémoire flash non volatile.

3. Module de mémoire à double rangée de contacts (500, 720, 920, 1120, 1320, 1420, 1520, 1620, 1720, 1820) selon la revendication 1 ou 2, dans lequel la banque de mémoire dynamique à accès aléatoire (723, 923, 1123) est située à l'extérieur du circuit intégré, en particulier dans lequel la banque de mémoire dynamique à accès aléatoire (723, 923, 1123) comprend une mémoire à débit de données dynamique et la banque de mémoire flash non volatile (728, 928, 1128, 1228, 1328, 1428, 1528, 1628, 1728, 1828) comprend un disque à l'état solide ( ).

4. Module de mémoire à double rangée de contacts (500, 720, 920, 1120, 1320, 1420, 1520, 1620, 1720, 1820) selon la revendication 1 ou 3, dans lequel le circuit intégré est configurable pour permettre :
aux données de module d'être lues à partir de la banque de mémoire flash non volatile (728, 928, 1128, 1228, 1328, 1428, 1528, 1628, 1728, 1828) en utilisant le deuxième schéma d'adressage ;
aux données de module d'être lues à partir de la banque de mémoire flash non volatile (728, 928, 1128, 1228, 1328, 1428, 1528, 1628, 1728, 1828) en utilisant le deuxième schéma d'adressage d'être écrites dans la banque de mémoire dynamique à accès aléatoire ;
aux données de module écrites dans la banque de mémoire dynamique à accès aléatoire (723, 923, 1123) d'être translatées du deuxième schéma d'adressage utilisé par la banque de mémoire flash non volatile (728, 928, 1128, 1228, 1328, 1428, 1528, 1628, 1728, 1828) au premier schéma d'adressage utilisé par la banque de mémoire dynamique à accès aléatoire ; et
aux données de module translatées au premier schéma d'adressage utilisé par la banque de mémoire dynamique à accès aléatoire (723, 923, 1123) d'être lues à partir de la banque de mémoire dynamique à accès aléatoire (723, 923, 1123) en utilisant le premier schéma d'adressage.

5. Module de mémoire à double rangée de contacts (500, 720, 920, 1120, 1320, 1420, 1520, 1620, 1720, 1820) selon la revendication 2 ou 3, dans lequel le circuit intégré est configurable pour permettre :
aux données de module d'être écrites dans la banque de mémoire dynamique à accès aléatoire (723, 923, 1123) en utilisant le premier schéma d'adressage ;
aux données de module écrites dans la banque de mémoire dynamique à accès aléatoire (723, 923, 1123) en utilisant le premier schéma d'adressage d'être lues ;
aux données de module lues à partir de la banque de mémoire dynamique à accès aléatoire (723, 923, 1123) d'être translatées du premier schéma d'adressage utilisé par la banque de mémoire dynamique à accès aléatoire (723, 923, 1123) au deuxième schéma d'adressage utilisé par la banque de mémoire flash non volatile ; et
aux données de module translatées au deuxième schéma d'adressage utilisé par la banque de mémoire flash non volatile (728, 928, 1128, 1228, 1328, 1428, 1528, 1628, 1728, 1828) d'être écrites dans la banque de mémoire flash non volatile (728, 928, 1128, 1228, 1328, 1428, 1528, 1628, 1728, 1828) en utilisant le deuxième schéma d'adressage.

6. Module de mémoire à double rangée de contacts (500, 720, 920, 1120, 1320, 1420, 1520, 1620, 1720, 1820) selon l'une des revendications 1 à 5, dans lequel le circuit intégré comprend en outre une mémoire tampon, en particulier dans lequel la mémoire tampon comprend en outre :
une mémoire tampon d'écriture comprenant un circuit de file d'attente de données d'écriture ; et
une mémoire tampon de lecture comprenant un circuit de file d'attente de données de lecture, en particulier dans lequel le circuit intégré est configuré pour permettre :
aux données de module d'être écrites de la mémoire tampon à la banque de mémoire dynamique à accès aléatoire ;
aux données de module d'être lues à partir de la banque de mémoire dynamique à accès aléatoire (723, 923, 1123) dans la mémoire tampon ; et
aux données de module d'être lues à partir de la banque de mémoire flash non volatile (728, 928, 1128, 1228, 1328, 1428, 1528, 1628, 1728, 1828) dans la mémoire tampon, ou aux données de module d'être écrites à partir de la mémoire tampon dans la banque de mémoire flash non volatile, respectivement.

7. Module de mémoire à double rangée de contacts (500, 720, 920, 1120, 1320, 1420, 1520, 1620, 1720, 1820) selon l'une des revendications 1 à 6, dans lequel le circuit intégré comprend en outre :
un processeur périphérique configuré pour exécuter des commandes ; et
un contrôleur configuré pour translater entre le premier schéma d'adressage utilisé par la banque de mémoire dynamique à accès aléatoire (723, 923, 1123) et le deuxième schéma d'adressage utilisé par la banque de mémoire flash non volatile (728, 928, 1128, 1228, 1328, 1428, 1528, 1628, 1728, 1828) en fonction d'instructions provenant du processeur périphérique.

8. Module de mémoire à double rangée de contacts (500, 720, 920, 1120, 1320, 1420, 1520, 1620, 1720, 1820) selon l'une des revendications 1 à 7, comprenant en outre un circuit en pont configuré pour permettre aux données de module d'être lues à partir de ou écrites dans la banque de mémoire flash non volatile, en particulier dans lequel le circuit en pont est configuré pour effectuer des opérations de sérialisation et de désérialisation, en particulier dans lequel le circuit en pont est situé dans le circuit intégré.

9. Système comprenant : une unité centrale de traitement (105, 712, 812), exécutant un système de fichiers local (1633), avec un contrôleur de mémoire (144) configuré pour recevoir une fourniture de données de module à partir d'une mémoire de module (110, 410, 500) en utilisant des canaux de données parallèles (115) ; et un module de mémoire à double rangée de contacts (500, 720, 920, 1120, 1320, 1420, 1520, 1620, 1720, 1820) selon la revendication 1, ledit module de mémoire à double rangée de contacts étant configuré pour envoyer les données de module à l'unité centrale de traitement (105, 712, 812) par le biais du contrôleur de mémoire (144).

10. Système selon la revendication 9, dans lequel le ou les circuits intégrés sont configurés pour permettre : aux données de module d'être écrites dans la banque de mémoire dynamique à accès aléatoire (723, 923, 1123) en utilisant le premier schéma d'adressage ; aux données de module écrites dans la banque de mémoire dynamique à accès aléatoire (723, 923, 1123) en utilisant le premier schéma d'adressage d'être lues ; aux données de module lues à partir de la banque de mémoire flash non volatile (728, 928, 1128, 1228, 1328, 1428, 1528, 1628, 1728, 1828) d'être translatées du deuxième schéma d'adressage utilisé par la banque de mémoire flash non volatile (728, 928, 1128, 1228, 1328, 1428, 1528, 1628, 1728, 1828) au premier schéma d'adressage utilisé par la banque de mémoire dynamique à accès aléatoire (723, 923, 1123) ; et aux données de module translatées au deuxième schéma d'adressage utilisé par la banque de mémoire flash non volatile (728, 928, 1128, 1228, 1328, 1428, 1528, 1628, 1728, 1828) d'être écrites dans la banque de mémoire dynamique à accès aléatoire (723, 923, 1123) en utilisant le premier schéma d'adressage.

11. Système selon la revendication 11, dans lequel le ou les circuits intégrés comprennent en outre une mémoire tampon, en particulier comprenant en outre un circuit en pont configuré pour permettre aux données de module d'être lues à partir de ou écrites dans la banque de mémoire flash non volatile (728, 928, 1128, 1228, 1328, 1428, 1528, 1628, 1728, 1828), dans lequel le circuit en pont est configuré pour effectuer des opérations de sérialisation ou de désérialisation.

12. Système comprenant :
une unité centrale de traitement (105, 712, 812) avec un contrôleur de mémoire (144) configuré pour la fourniture directe de données de module de l'unité centrale de traitement (105, 712, 812) à une mémoire de module (110, 410, 500) en utilisant des canaux de données parallèles (115) ; et
un module de mémoire à double rangée de contacts (500, 720, 920, 1120, 1320, 1420, 1520, 1620, 1720, 1820) selon la revendication 2, ledit module de mémoire à double rangée de contacts étant configuré pour recevoir les données de module à partir de l'unité centrale de traitement (105, 712, 812).

13. Système selon la revendication 12, dans lequel le circuit intégré est configurable pour permettre :
aux données de module d'être écrites dans la banque de mémoire dynamique à accès aléatoire (723, 923, 1123) en utilisant le premier schéma d'adressage ;
aux données de module écrites dans la banque de mémoire dynamique à accès aléatoire (723, 923, 1123) en utilisant le premier schéma d'adressage d'être lues ;
aux données de module lues à partir de la banque de mémoire dynamique à accès aléatoire (723, 923, 1123) d'être translatées du premier schéma d'adressage utilisé par la banque de mémoire dynamique à accès aléatoire (723, 923, 1123) au deuxième schéma d'adressage utilisé par la banque de mémoire flash non volatile ; et
aux données de module translatées au deuxième schéma d'adressage utilisé par la banque de mémoire flash non volatile (728, 928, 1128, 1228, 1328, 1428, 1528, 1628, 1728, 1828) d'être écrites dans la banque de mémoire flash non volatile (728, 928, 1128, 1228, 1328, 1428, 1528, 1628, 1728, 1828) en utilisant le deuxième schéma d'adressage.

14. Système selon la revendication 12 ou 13, dans lequel le circuit intégré comprend en outre une mémoire tampon.

15. Système selon l'une des revendications 12 à 14, comprenant en outre un circuit en pont configuré pour permettre aux données de module d'être lues à partir de ou écrites dans la banque de mémoire flash non volatile, en particulier dans lequel le circuit en pont est configuré pour effectuer des opérations de sérialisation et de désérialisation.
